# EUROPÄISCHE PATENTSCHRIFT

(11) **EP 1 619 870 B1**
(45) Veröffentlichungstag und Bekanntmachung des Hinweises auf die Patenterteilung: **10.10.2012**
(21) Anmeldenummer: 05077302.7
(22) Anmeldetag: 13.07.1998
(51) Int. Cl.: H04Q 3/00, H04M 15/00

(54) **Verfahren und Mobilfunknetz zur Vergebührung von Anrufen**
Method and mobile network for call billing
Procédé et réseau mobile pour la taxation des appels

(30) Priorität: 22.07.1997 DE 19731461; 22.07.1997 DE 19731463
(43) Veröffentlichungstag der Anmeldung: 25.01.2006
(62) Teilanmeldung aus: 98943683.7
(73) Patentinhaber: Telefónica Germany GmbH & Co. OHG, 80992 München (DE)
(72) Erfinder: Freyer, Bernd, 85662 Hohenbrunn (DE)
(74) Vertreter: Herrmann, Uwe

(56) Entgegenhaltungen:
- EP-A- 0 597 638
- WO-A-94/07322
- WO-A-96/20571
- WO-A-97/08884
- WO-A-97/13387
- WO-A-98/42151
- US-A- 5 568 153

## Beschreibung

Die Anneldung betrifft ein Verfahren zur Vergebührung von Anrufen in einem Mobilfunknetz mit einer aus Funkzellen aufgebauten zellularen Struktur gemäß dem Oberbegriff des Patentanspruchs 1, ein derartiges Mobilfunknetz sowie eine Mobilstation.

Bekanntlich haben Mobilfunknetze, wie beispielsweise die nach dem GSM-Standard (Global System for Mobile Communication), eine zellulare Netzstruktur, bestehend aus einer Mehrzahl von Funkzellen als kleinste Funkversorgungsbereiche. Dabei können mehrere Funkzellen zu Aufenthaltsgebieten zusammengefasst sein, deren Größe vom Netzbetreiber abhängig von den durch Verkehrsdichte und -fluss, Bevölkerungsdichte und Teilnehmermobilität gestellten Anforderungen auch unterschiedlich festlegbar ist. Der Netzbetreiber gibt eine Funknetzplanung vor, die Struktur, Anordnung und Anzahl der Funkzellen und Aufenthaltsgebiete enthält. Des weiteren ist bekannt, dass ein Mobilfunknetz mit zellularer Netzstruktur funktechnische Einrichtungen zum Senden/ Empfangen von Signalisierungs- und/oder Nutzinformationen zu/ von den Mobilstationen sowie vermittlungstechnische Einrichtungen zum Durchschalten von Signalisierungs- und/oder Nutzverbindungen aufweist. Speichereinrichtungen im Mobilfunknetz enthalten die Teilnehmerdaten der registrierten mobilen Teilnehmer, die Anrufe absetzen und entgegennehmen wollen. Zur Ermittlung der jeweiligen Anrufgebühr für einen Anruf ist zumindest eine Vergebührungseinrichtung im Mobilfunknetz angeordnet, die anrufbezogene Datensätze - beispielsweise des A-Teilnehmers (anrufender Teilnehmer) und des B-Teilnehmers (angerufener Teilnehmer) - aufzeichnet und abhängig von diesen Datensätzen die Anrufgebühr berechnet. Im Zeichen der wachsenden Anzahl deregulierter Kommunikationsnetze, einer höheren Mobilitätsnachfrage und sinkenden Preisen für Telekommunikationsleistungen sowie hohen Kosten zur Bereitstellung der letzten Meile für einen Festnetzanschluss eines leitungsgebundenen Teilnehmers ist es wünschenswert, auch im Mobilfunknetz eine der Gebührenstruktur von Festnetzen nachgebildete Gebührenstruktur zur Vergebührung der Anrufe mobiler Teilnehmer zu haben. Dies würde eine höhere Bereitschaft der leitungsgebundenen Teilnehmer, die in der Regel geringere Gebühren gegenüber den mobilen Teilnehmern haben, zum Wechsel in die mobile Kommunikation nach sich ziehen.

Aus der internationalen Patentanmeldung WO 97/08884 sind ein Verfahren und ein Mobilfunknetz zur Vergebührung von Anrufen mobiler Teilnehmer bekannt. Dabei versorgen Basisstationen die Funkzellen des zellular aufgebauten Netzes. Um auch den mobilen Teilnehmern eine flexiblere Gebührenstruktur - vergleichbar der im Festnetz - anbieten zu können, legt der Netzbetreiber des Mobilfunknetzes fest, welche Funkzellen zu Gebührenzonen (charging regions), in denen jeweils durch einen entsprechend zugeordneten Zonentarif eine spezielle Vergebührung gilt, sowie welche Gebührenzonen zu Gebührengebieten (charging areas) gruppiert werden. Der Netzbetreiber veranlasst die Gruppierung der Funkzellen und/oder der Gebührenzonen für die mobilen Teilnehmer, die einen gemeinsamen Ort und ein gemeinsames Telefonierverhalten aufweisen.

Aus der Europäischen Patentanmeldung EP 0 597 638 A1 ist ein Mobilfunksystem bekannt, bei dem eine Vergebührung des Anrufs abhängig vom momentanen Aufenthaltsort der Mobilstation durchgeführt wird. So werden niedrige Gebühren beispielsweise dann abgebucht, wenn die Mobilstation sich in ihrem Heimbereich befindet. Eine Gruppierung von Funkzellen und/ oder Gebieten für eine bevorzugte Vergebührung erfolgt nicht.

Aus der internationalen Patentanmeldung WO 96/20571 ist ein Verfahren zur Verbesserung der Vergebührungskriterien in einem Mobilfunknetz bekannt, bei dem eine Dienstesteuereinrichtung (Service Control Point) analysiert, ob die Funkzelle, in dem sich der angerufene mobile Teilnehmer aktuell befindet, zu einer gemeinsamen speziellen Funkzellengruppe gehören. Für diese spezielle Funkzellengruppe wird von der Dienstesteuereinrichtung ein bestimmtes Vergebührungskriterium angewendet. Dabei sind die Funkzellen der Funkzellengruppe in Gebieten, die von unterschiedlichen Vermittlungseinrichtungen bedient werden, angeordnet.

Aus der internationalen Patentanmeldung WO 97/13387 ist ein Verfahren zur Identifikation einer Heimatzone in einem Mobilfunksystem bekannt, bei dem zum Zeitpunkt der Registrierung in der Heimatzone eine spezielle Anrufnummer von einem Kunden gewählt wird. Das Mobilfunksystem identifiziert den Kunden sowie die Anrufnummer und ermittelt, welche Basisstationen in Verbindung mit der Registrierung aktiv sind. Der Kunde hat dann Zugriff zu bestimmten Diensten innerhalb der Heimatzone oder zu einer verringerten Vergebührung.

Die US 5,568,153 offenbart ein Mobilfunksystem, das das Einrichten von Zonen mit abweichender Vergebührung ermöglicht. Über eine Ermittlung der Laufzeit des Funksignals von der Basisstation zur Mobilstation wird netzseitig ermittelt, in welcher Entfernung zur Basisstation sich die Mobilstation des Nutzers befindet. Hierdurch wird netzseitig festgestellt, ob sich die Mobilstation des Nutzers innerhalb oder außerhalb der Zone mit abweichender Vergebührung befindet.

Die WO 94/07322 betrifft ein Verfahren zum Betrieb eines Mobilfunksystems, das sich mit der Vermeidung von Interferenzen benachbarter und/oder teilweise überlappender Funkzellen befasst. Über einen Kontrollkanal jeder Zelle können Absolutinformationen über die Zelle und Relativinformation betreffend andere Zellen übermittelt werden.

Aus der nachveröffentlichten internationalen Patentanmeldung WO 98/42151 mit dem Veröffentlichungstag 24. September 1998 ist ein Verfahren zur Bestimmung der Anrufgebühr in einem Mobilfunknetz bekannt, bei dem mehrere Heimatzonen definiert und verschiedenen Funkgebieten zugeordnet werden. Bei Aufenthalt eines mobilen Teilnehmers in einer dieser Heimatzonen ermittelt die zuständige Vermittlungseinrichtung, ob diese Heimatzone bezüglich der Anwendung einer verringerten Vergebührung des Anrufs momentan wirksam ist. Die nach Größe und Ort unterschiedlichen Heimatzonen können im Hinblick auf die Vergebührung bezüglich des Zeitpunkts des Anrufs - beispielsweise zu welcher Tageszeit oder an welchem Wochentag - variieren.

Daher ist es Aufgabe der vorliegenden Erfindung, ein Verfahren der eingangs genannten Art zu schaffen, durch das die Vergebührung von Anrufen mit flexibler Gebührenstruktur unter weitestgehender Ausnutzung der Netzstruktur individuell an die Bedürfnisse und Wünsche der mobilen Teilnehmer angepasst werden kann und das zudem für den mobilen Teilnehmer leicht handhabbar und für den Netzbetreiber einfach durchführbar ist. Eine weitere Aufgabe der Erfindung besteht darin, ein Mobilfunknetz der eingangs genannten Art anzugeben, mit dem sich die Vergebührung von Anrufen mit flexibler Gebührenstruktur unter weitestgehender Ausnutzung der Netzstruktur individuell an die Bedürfnisse und Wünsche der mobilen Teilnehmer anpassen lässt, wobei die Anpassung für den mobilen Teilnehmer leicht handhabbar und für den Netzbetreiber einfach durchführbar ist. Darüber hinaus ist eine Mobilstation anzugeben, die die individuelle Anpassung einer flexiblen Gebührenstruktur unterstützt.

Diese Aufgabe wird durch die Merkmale des Patentanspruchs 1 hinsichtlich des Verfahrens, durch die Merkmale des Patentanspruchs 26 hinsichtlich des Mobilfunknetzes und durch die Merkmale des Patentanspruchs 30 hinsichtlich der Mobilstation gelöst. Weiterbildungen der Erfindung sind in den Unteransprüchen angegeben.

Ausgehend davon, dass Funkzellen und/oder Aufenthaltsgebiete zu einer oder mehreren Zonen zusammengefasst und Zonentarife den Zonen zugeteilt werden, erfolgt gemäß dem Gegenstand der Erfindung eine teilnehmerindividuelle Definition der Zonen für den mobilen Teilnehmer und eine Zuordnung dieser Zonen zu einem geografischen Ort des mobilen Teilnehmers durch ein geografisches Informationssystem. Von der Vergebührungseinrichtung werden jeweils durch eine Netzdatenbasis zur Verfügung gestellte Informationen über die für den mobilen Teilnehmer individuell definierten Zonen und Zonentarife empfangen und bei Aufenthalt des mobilen Teilnehmers in einer der Zonen zum Ermitteln der jeweiligen Anrufgebühr verwendet. Die teilnehmerindividuelle - im Gegensatz zu der vom Netzbetreiber gewünschten - Vereinbarung von Zonen mit zugehörigen - z.B. unterschiedlichen - Zonentarifen führt zu einer flexiblen Gebührenstruktur ähnlich einer gestaffelten Gebührenstruktur im Festnetz. Die Zuordnung der Zone zu jeweils einem geografischen Ort des mobilen Teilnehmers - beispielsweise zu seiner Heimatadresse (Straße), Büroadresse oder Stadtbereich im Unterschied zu einem durch das Funkgebiet definierten Aufenthaltsort - und die Zuteilung des Zonentarifs zur jeweiligen Zone ermöglicht eine teilnehmerindividuelle Definition mehrerer Zonen für ein- und denselben mobilen Teilnehmer nur nach geografischen Gesichtspunkten. Ein weiterer Vorteil der Zuordnung besteht darin, dass bei Kenntnis des geografischen Orts des Teilnehmers - z.B. der Straße - , bereitgestellt durch das eigene Informationssystem, die entsprechende Zone und der zugehörige Zonentarif automatisch zur Vergebührung in der Vergebührungseinrichtung vorliegt, die diese Informationen von einer hierfür zuständigen eigenen Netzdatenbasis empfängt. Die zonenabhängige Vergebührung der Anrufe mobiler Teilnehmer gemäß dem Gegenstand der Erfindung basiert nicht auf einer vermittlungstechnischen Lösung durch die Vermittlungseinrichtungen des Mobilfunknetzes. Vielmehr kommen vorzugsweise entweder die Mobilstation des mobilen Teilnehmers bzw. deren Teilnehmeridentitätsmodul (SIM) oder ein IN-Konzept (Intelligent Network) zur Anwendung.

Gemäß der Erfindung werden die Informationen über die für den mobilen Teilnehmer definierten Zonen vom Netz zur Mobilstation gesendet und mobilstationsseitig - vorzugsweise in dem Teilnehmeridentitätsmodul der Mobilstation - gespeichert. Der Vorteil besteht darin, dass die Mobilstation bei Aufenthalt des mobilen Teilnehmers in einer zu einer definierten Zonen die jeweils gültige Zone am Endgerät jederzeit und sofort anzeigen kann. Die mobilstationsseitige Speicherung der Informationen benötigt keinen zusätzlichen Hardware-Aufwand und beeinflusst auch nicht die Leistungs-/Mobilitätskapazität des Endgeräts während der Berechung der jeweils gültigen Zone. Die im Endgerät unterstützten Leistungsmerkmale bleiben von den zusätzlichen Speichermaßnahmen unberührt.
Vorzugsweise werden als Informationen zumindest eine Zonenkennung zur Identifikation des Zonentyps sowie Zellenkennungen zur Identifikation der Funkzellen und/oder Gebietskennungen zur Identifikation der Aufenthaltsgebiete gespeichert.

Es hat sich dabei als vorteilhaft erwiesen, die Informationen zwischen dem Netz und der Mobilstation in Signalisierungsnachrichten zu übertragen, wobei es besonders vorteilhaft ist, die Informationen zwischen einer Kurznachrichtendiensteinrichtung des Netzes und der Mobilstation in einer oder mehreren Kurznachrichten des Kurznachrichtendienstes zu signalisieren. Dadurch brauchen zur Übertragung der Informationen keine neuen Signalisierungsverfahren oder - protokolle benutzt zu werden, was die Implementierung der zonenabhängigen Vergebührung in einem bestehenden Mobilfunknetz wesentlich erleichtert.

Eine weitere vorteilhafte Ausgestaltung der Erfindung sieht vor, dass zur Überprüfung, ob der mobile Teilnehmer sich in einer seiner definierten Zonen aufhält, ein Vergleich von über die Luft empfangene Informationen, die eine Lokalisierung der Mobilstation in einer Funkzelle oder in einem Aufenthaltsgebiet ermöglichen, mit den mobilstationsseitig gespeicherten Informationen durchgeführt wird. Dadurch kann die Lokalisierung des mobilen Teilnehmers hinsichtlich seines Aufenthalts in einer der definierten Zonen jederzeit überwacht werden, sobald die Mobilstation sich in das Mobilfunknetz eingebucht hat.

Weiterhin ist es von Vorteil, wenn bei mehreren ineinander liegenden Zonen eine Priorisierung der Zonen mit entsprechendem Zonentarif zur Vergebührung erfolgt. Auch eine Aufsplittung des für eine definierte Zone gültigen Zonentarifs in einem Basistarif und in einem distanzabhängigen Tarif, der die Aufenthaltsorte des anrufenden Teilnehmers und/oder des angerufenen Teilnehmers berücksichtigt, führt zu einer erhöhten Flexibilität der Gebührenstruktur für den mobilen Teilnehmer.

Sind die Zonen initialisiert und eingerichtet, kann vorzugsweise netzseitig jederzeit eine Überprüfung der in der Mobilstation und in der Vergebührungseinrichtung vorliegenden Informationen teilnehmerspezifisch initiiert werden. Dabei werden die gespeicherten Informationen angefordert und ausgewertet. Damit können möglicherweise auftretende Unterschiede in den netzseitig und mobilstationsseitig gespeicherten Informationen über die für einen Teilnehmer jeweils gültigen Zonen und Zonentarife aufgedeckt und korrigiert werden.

Insbesondere hat sich als Vorteil erwiesen, dass Änderungen der Netzstruktur bezogen auf die Funkzellen und/oder die Aufenthaltsgebiete netzseitig berücksichtigt und neue Informationen zur Kennzeichnung der von den Änderungen betroffenen Zonen für die Teilnehmer eingetragen werden.

Gemäß einer weiteren vorteilhaften Ausgestaltung der Erfindung werden die Zonen vom Mobilfunknetzbetreiber oder einem Diensteanbieter vorinitialisiert bzw. vom Teilnehmer selbst ferninitialisiert werden. Bei der Vorinitialisierung übermittelt der Mobilfunknetzbetreiber oder der Diensteanbieter jeweils die Teilnehmerrufnummer und den Standort des mobilen Teilnehmers sowie zumindest eine Zonenkennung zum Netz und erhält eine Bestätigung über ein erfolgreiches Registrieren der Zonen. Bei der Fernintialisierung hält sich der mobile Teilnehmer an seinem geografischen Ort auf und legt im Dialog mit dem Mobilfunknetz die Funkzellen und/oder Aufenthaltsgebiete seiner jeweiligen Zonen durch Eingaben in die Mobilstation fest.

Bei einer besonders vorteilhaften Weiterbildung der Erfindung erfolgt eine Speicherung der teilnehmerindividuellen Definition der Zonen für den Teilnehmer und die Zuordnung der Zonen zu geografischen Orten sowie die Zuteilung der Zonentarife zu den Zonen in einer die Steuerung von Diensten intelligenter Netze unterstützenden Dienstesteuerungsstelle. Dies entspricht einer Implementierung der zonenabhängigen Vergebührung anhand eines IN-Konzepts. Die Vorteile dieser Lösung bestehen darin, die Zoneninformationen lediglich an einer zentralen Stelle - innerhalb der Dienstesteuerungsstelle - speichern und pflegen zu müssen, sowie sehr flexibel zukünftige Netzwerkplanungen - beispielsweise durch Ausdehnung oder Änderung der zellularen Netzstruktur - und Teilnehmerdatenhaltung sowie Betrugsüberwachung bezüglich der Gebühren und Tarifzonen steuern und verwalten zu können. Ein weiterer Vorteil des IN-Konzepts besteht in dem eingeführten einfachen Interworking zwischen Mobilfunknetz und Dienstesteuerungsstelle zur Unterstützung von IN-Diensten, beispielsweise hinsichtlich der Teilnehmerrufnummern-Portabilität. Die Anrufbehandlung bei Vorliegen eines IN-Anrufs kann gemäß bekannter Maßnahmen und Prozeduren - beispielsweise der Signalisierung nach dem zentralen Zeichengabesystem Nr. 7 - zwischen Vermittlungseinrichtung und Dienstesteuerungsstelle ohne Mehraufwand genutzt werden.

Dabei ist von Vorteil, dass die Dienstesteuerungsstelle eine Dienstelogik enthält, die abhängig vom Erkennen des In-Anrufs teilnehmerspezifisch die Zonen in einer Initialisierungsphase registriert oder den Anruf in einer Anrufbehandlungsphase in Bezug auf einen möglichen Aufenthalt in einer der definierten Zonen oder in einer Änderungsphase die Zonen für den anrufenden Teilnehmer modifiziert bzw. löscht.

Vorzugsweise wird in der Dienstesteuerungsstelle eine Liste der Zuordnungen zwischen geografischen Orten und Zellenkennungen zur Identifikation der Funkzellen und/oder Gebietskennungen zur Identifikation der Aufenthaltsgebiete gespeichert. Eine andere vorteilhafte Weiterbildung der Erfindung sieht vor, dass abhängig vom Erkennen eines In-Anrufs teilnehmerspezifisch die Zonen für den anrufenden mobilen Teilnehmer in einer Initialisierungsphase registriert und Informationen über die jeweils gültigen Zonen bereitgestellt werden. Diese Informationen werden dann vorzugsweise in einer oder mehreren Kurznachrichten des Kurznachrichtendienstes zur Mobilstation des Teilnehmers gesendet und mobilstationsseitig gespeichert. Dadurch kann eine Anrufbehandlung ohne Zugriff zur Dienstesteuerungsstelle erfolgen. Die mobilstationsseitig gespeicherten Informationen können zur Anzeige der jeweils gültigen Zone an der Mobilstation des mobilen Teilnehmers herangezogen werden. Die Vergebührungseinrichtung besitzt alle zonenabhängigen Tarifinformationen um die anrufbezogenen Datensätze berechnen und auswerten zu können. Eine Anzeige, in welcher Zone der mobile Teilnehmer sich gerade befindet, kann daher in Echtzeit erfolgen.

Das Mobilfunknetz gemäß dem Gegenstand der Erfindung weist eine Netzdatenbasis auf, die Informationen über jeweils für den mobilen Teilnehmer teilnehmerindividuell definierte Zonen mit zugehörigen Zonentarifen speichert und diese Informationen der Vergebührungseinrichtung zum Ermitteln der jeweiligen Anrufgebühr bei Aufenthalt des mobilen Teilnehmers in einer der Zonen zur Verfügung stellt. Des Weiteren ist ein geografisches Informationssystem vorgesehen, das die teilnehmerindividuell definierten Zonen jeweils einem geografischen Ort des mobilen Teilnehmers zuordnet.

Bei Implementierung der zonenabhängigen Vergebührung ist gemäß einer vorteilhaften Weiterbildung der Erfindung die Netzdatenbasis in der die Steuerung von Diensten intelligenter Netze unterstützenden Dienstesteuerungsstelle integriert.

Die Mobilstation zur Unterstützung der zonenabhängigen Vergebührung weist Mittel zur Speicherung von netzseitig durch eine Netzdatenbasis gesendeten Informationen über Zonen auf, die für den mobilen Teilnehmer jeweils teilnehmerindividuell definiert und durch ein geografisches Informationssystem einem geografischen Ort des mobilen Teilnehmers zugeordnet sind.

Einzelheiten der Erfindung werden in Ausführungsbeispielen, die in der Zeichnung dargestellt sind, näher erläutert. Im Einzelnen zeigen
- FIG 1: ein Blockschaltbild der Einrichtungen zur zonenabhängigen Vergebührung von Anrufen mobiler Teilnehmer bei Ver- wendung des Kurznachrichtendienstes für die Informationsübertragung zwischen Netz und Mobilstation,
- FIG 2: ein Blockschaltbild der Einrichtungen zur zonenabhängigen Vergebührung der Anrufe unter Verwendung einer IN-Dienstesteuerungsstelle zur Informationsübertragung,
- FIG 3: ein Blockschaltbild der Einrichtungen zur zonenabhängigen Vergebührung unter Einbindung einer In-Dienstesteuerungsstelle und Nutzung des Kurznachrichtendienstes zur Informationsübertragung,
- FIG 4: die beispielhafte Ausgestaltung einer Heimatzone, bestehend aus mehreren Funkzellen,
- FIG 5: die beispielhafte Ausgestaltung einer Stadtzone, bestehend aus mehreren Aufenthaltsgebieten sowie einer zusätzlichen Funkzelle,
- FIG 6: die beispielhafte Ausgestaltung von zwei Bürozonen, bestehend aus jeweils mehreren Funkzellen,
- FIG 7: einen Nachrichtenfluss zum Vorinitialisieren der jeweiligen Zonen durch einen Mobilfunknetzbetreiber oder einen Diensteanbieter und
- FIG 8: einen Nachrichtenfluss zum Ferninitialisieren der jeweiligen Zonen durch den mobilen Teilnehmer selbst.

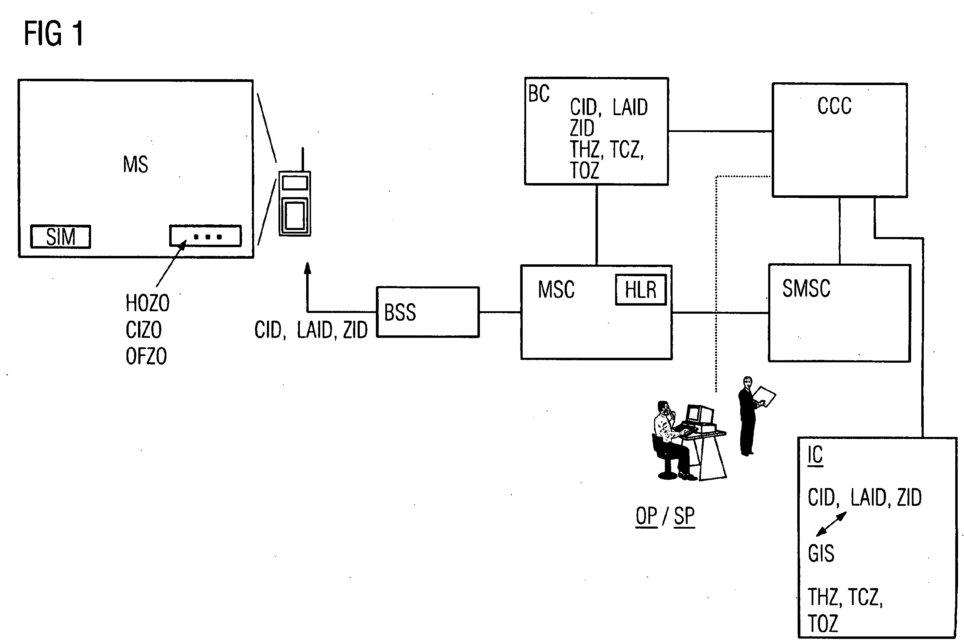

FIG 1 zeigt das Blockschaltbild der Einrichtungen für eine zonenabhängige Vergebührung von Anrufen in einem Mobilfunknetz, die von Mobilstationen mobiler Teilnehmer gesendet und empfangen werden können. Im vorliegenden Beispiel ist eine Mobilstation MS eines mobilen Teilnehmers dargestellt, die über eine Funkschnittstelle mit den Einrichtungen des Mobilfunknetzes drahtlos verbunden ist. Dabei weist das Mobilfunknetz - z.B. ein Mobilfunknetz nach dem GSM-Standard - an der Funkschnittstelle ein funktechnisches Teilsystem BSS auf, das über Basis-Sende-Empfangsstationen in den einzelnen Funkzellen des zellular strukturierten Mobilfunknetzes sowie über Basisstationssteuerungen, die mit den Empfangsstationen verbunden sind, verfügt. Die Empfangsstationen dienen zum Senden/Empfangen von Signalisierungsinformationen bzw. Nutzinformationen, die zwischen den Mobilstationen und dem Netz drahtlos über Funksignale ausgetauscht werden. Die Basisstationssteuerungen übernehmen die steuerungstechnischen Funktionen für die Funkübertragung, so beispielsweise die Zuordnung von Übertragungskanälen, in denen die Signalisierungsinformationen und/oder die Nutzinformationen übertragen werden.

Mit dem funktechnischen Teilsystem BSS ist ein vermittlungstechnisches Teilsystem verbunden, das üblicherweise mehrere vermittlungstechnische Einrichtungen - beispielsweise die Mobilvermittlungsstellen MSC - zum Durchschalten der Signalisierungsverbindungen und/oder der Nutzverbindungen zu/von den Mobilstationen aufweist. Im vermittlungstechnischen Teilsystem sind weiterhin Speichereinrichtungen - wie beispielsweise ein Heimatregister HLR und ein oder mehrere Besucherregister - zum Speichern der Teilnehmerdaten der im Mobilfunknetz registrierten mobilen Teilnehmer angeordnet. Die Teilnehmerdaten eines mobilen Teilnehmers sind dabei in einem für ihn zuständigen Heimatregister HLR für die Dauer seiner Registrierung im Netz permanent eingetragen, während die Teilnehmerdaten des mobilen Teilnehmers in einem Besucherregister für die Dauer seines Aufenthalts im Zuständigkeitsbereich einer zugehörigen Mobilvermittlungsstelle MSC nur vorübergehend eingetragen sind. An die Mobilvermittlungsstelle MSC ist zumindest eine Kurznachrichtendiensteinrichtung SMSC angeschlossen, die für den mobilen Teilnehmer bzw. seine Mobilstation bestimmte Kurznachrichten zwischenspeichert und bei Erreichbarkeit der Mobilstation eine oder mehrere Kurznachrichten parallel zu gegebenenfalls bestehenden Anrufverbindungen zur jeweiligen Mobilstation MS signalisiert.

Mit der Mobilvermittlungsstelle MSC ist darüber hinaus eine Vergebührungseinrichtung BC verbunden, die die anrufbezogenen Datensätze des A-Teilnehmers und des B-Teilnehmers aufzeichnet und die jeweilige Anrufgebühr durch Verknüpfung der A-seitigen und B-seitigen Datensätze (Call Data Records) ermittelt. Mit der Vergebührungseinrichtung BC steht eine Verwaltungseinrichtung CCC in Verbindung, die einerseits die Vergebührungseinrichtung BC verwaltet und andererseits Eingaben von einem Netzbetreiber OP oder einem Diensteanbieter SP über eine gesonderte Schnittstelle empfängt. Die Verwaltungseinrichtung CCC ist auch mit der Kurznachrichtendiensteinrichtung SMSC verbunden.

Im Mobilfunknetz ist darüber hinaus eine Netzdatenbasis IC angeordnet und an die Verwaltungseinrichtung CCC angeschlossen, über die die Netzdatenbasis IC mit den übrigen Netzeinrichtungen des Mobilfunknetzes kommunizieren kann. Die Netzdatenbasis IC speichert Zellenkennungen CID zur Identifikation von Funkzellen des zellular strukturierten Mobilfunknetzes und Gebietskennungen LAID zur Identifikation von Aufenthaltsgebieten im Mobilfunknetz. Durch Zusammenfassung der Funkzellen und/oder der Aufenthaltsgebiete, die an ihren Kennungen identifizierbar sind, werden für den mobilen Teilnehmer eine oder mehrere Zonen teilnehmerindividuell definiert. Für den Fall, dass es sich um unterschiedliche Zonen handelt, können die einzelnen Zonen anhand ebenfalls in der Netzdatenbasis IC abgelegter Zonenkennungen ZID identifiziert werden. Darüber hinaus sind den Zonen, z.B. HOZO (Home Zone), CIZO (City Zone) und OFZO (Office Zone), entsprechende Zonentarife, z.B. THZ, TCZ und TOZ, zugeordnet, die auch in der Netzdatenbasis IC, besonders aber in der Vergebührungseinrichtung BC gespeichert sind.
Die Netzdatenbasis IC verfügt auch über ein grafisches Informationssystem GIS, durch das eine Beziehung zwischen dem Ort - z.B. der Adresse - eines mobilen Teilnehmers und seiner Heimatzone HOZO, in der seine Heimat-Funkzelle liegt, herstellbar ist. Die zellulare Netzstruktur des Mobilfunknetzes gemäß der bestehenden Funknetzplanung sowie eine Aufzeichnung der Gebäude, der Straßennamen und der Gebäudenummern werden als geografische Daten dem Informationssystem GIS zur Verfügung gestellt, das daraus eine Zuordnung der Zone zu einem geografischen Ort - z.B. der Heimatzone HOZO zu seiner Privatadresse - des mobilen Teilnehmers durch einfache softwaretechnische Funktionen liefert. Für den mobilen Teilnehmer läßt sich die Heimatzone HOZO dadurch definieren, dass durch Eingabe seiner Adresse - beispielsweise über den Netzbetreiber OP bzw. Diensteanbieter SP - in die Verwaltungseinrichtung CCC bzw. Netzdatenbasis IC die zu der Heimatzone gehörigen Funkzellen mit ihren Zellenkennungen CID ausgegeben werden. Bei Definition mehrerer Zonen für ein- und denselben mobilen Teilnehmer werden die Zonentarife THZ, TCZ, TOZ - vorzugsweise unterschiedliche Zonentarife - den eingerichteten Zonen HOZO, CIZO, OFZO zugeteilt, um zur Vergebührung der Anrufe eine zonenabhängige Gebührenstruktur den mobilen Teilnehmern ähnlich der Gebührenstruktur in dem Festnetz anbieten zu können.

Für den Fall, dass die Netzstruktur sich ändert oder die Zellenkennung (Cell Global Identity, CGI) neu definiert wird, erfolgt eine Korrektur für die mobilen Teilnehmer, für die Zonen mit jeweils von den Änderungen betroffenen Funkzellen bzw. Aufenthaltsgebieten eingerichtet sind. In der Netzdatenbasis IC werden immer die Funkzellenkennungen CID, die Gebietskennungen LAID und die Zonenkennungen ZID gespeichert, die für den jeweiligen mobilen Teilnehmer aktuell gültig sind. Diese Informationen werden auch der Vergebührungseinrichtung BC - im dargestellten Beispiel über die Verwaltungseinrichtung CCC - mitgeteilt, so dass die Vergebührungseinrichtung BC über die für einen mobilen Teilnehmer gültigen Zonen und Zonentarife für eine zonenabhängige Vergebührung jederzeit informiert ist. So werden bei Aufenthalt des mobilen Teilnehmers in einer der für ihn definierten Zonen die entsprechenden Zonentarife bei der Verknüpfung der A-seitigen und B-seitigen aufgezeichneten Datensätze berücksichtigt. Vorzugsweise umfasst der Zonentarif einen Basistarif sowie einen von der Distanz zwischen A-Teilnehmer und B-Teilnehmer abhängigen Tarif. Für die Festlegung der distanzabhängigen Vergebührung werden die Aufenthaltsorte des A-Teilnehmers und/oder des B-Teilnehmers - je nachdem, ob es sich um einen mobilen oder einen leitungsgebundenen Teilnehmer handelt oder eine definierte Zone vorliegt oder nicht, bei der Berechnung der Anrufgebühr ermittelt.

Die Informationen CID, LAID, ZID über die für den mobilen Teilnehmer definierten Zonen werden im Mobilfunknetz aufbereitet - beispielsweise von der Netzdatenbasis IC - und zur Mobilstation MS des Teilnehmers gesendet - vorzugsweise in einer oder mehreren Kurznachrichten des bekannten Kurznachrichtendienstes (Short Message Service) - sowie mobilstationsseitig gespeichert. Es hat sich dabei als günstig erwiesen, die Zoneninformationen im Teilnehmeridentitätsmodul SIM der Mobilstation MS einzutragen. Zur Informationsübertragung zwischen Netz und Mobilstation können auch andere Signalisierungsnachrichten benutzt werden, wie beispielsweise die USSD-Containernachrichten (Unstructured Supplementary Services Data), um zur Realisierung der zonenabhängigen Vergebührung bestehende Signalisierungsverbindungen nicht erweitern zu müssen oder gar neue Signalisierungsprotokolle einführen zu müssen. Bei Verwendung des Kurznachrichtendienstes wird die Kurznachrichtendiensteinrichtung SMSC von der Verwaltungseinrichtung CCC mit den Zoneninformationen beliefert und aufgefordert, diese Informationen gemäß dem Kurznachrichtendienst zu übermitteln.

Sobald das Teilnehmeridentitätsmodul SIM in der Mobilstation MS aktiviert ist, das heißt, die Mobilstation MS sich in das Mobilfunknetz einbucht, wird mobilstationsseitig überprüft, ob sie sich in einer für den mobilen Teilnehmer definierten Zone befindet. Die Überprüfung erfolgt vorzugsweise durch Vergleich von Informationen, die über die Luft im Funkfeld empfangen werden kann und die eine Lokalisierung der Mobilstation MS in einer der identifizierbaren Funkzellen oder in einem der identifizierbaren Aufenthaltsgebiete ermöglichen, mit den mobilstationsseitig gespeicherten Informationen. Die für den mobilen Teilnehmer aktuell gültige Zone wird an der Mobilstation MS optisch angezeigt - beispielsweise durch ein Wort im Display oder ein sichtbares Kennungszeichen (Icon) - und/oder akustisch mitgeteilt - beispielsweise durch einen Ton oder eine Melodie. Abhängig von dem Status der Mobilstation MS, das heißt, ob sich die Mobilstation in einer definierten Zone aufhält oder nicht aufhält, werden unterschiedliche Tarife zur Vergebührung herangezogen und optional entsprechende Sicherheitsfunktionen und/oder anrufbezogene Aktionen mobilstationsseitig und netzseitig unterstützt oder nicht unterstützt. Anrufbezogene Aktionen sind beispielsweise das Sperren von abgehenden Anrufen oder das Sperren internationaler Anrufe jeweils für den Fall, dass sich die Mobilstation MS nicht in zumindest einer der definierten Zonen aufhält. Relevante Sicherheitsfunktionen betreffen beispielsweise die Verminderung des Gebührenbetrugs durch Anwendung und Auswertung der zonenabhängigen Vergebührung.

Angenommen, es sind mobilstationsseitig Zoneninformationen zu mehreren Zonen - beispielsweise einer Heimatzone HOZO, einer Stadtzone CIZO und einer oder mehrerer Bürozonen OFCO - gespeichert, die zumindest teilweise ineinanderliegen, kann eine Priorisierung der Zonen zur Vergebührung mit den entsprechenden Zonentarifen erfolgen. Befindet sich beispielsweise die Heimatzone HOCO in der Stadtzone CIZO, wird beispielsweise der billigere Zonentarif der Heimatzone HOCO dem teureren Zonentarif der Stadtzone CIZO vorgezogen und zur Vergebührung durch die Vergebührungseinrichtung BC berücksichtigt. Bei einer Modifikation der Netzstruktur, die Auswirkung auf Funkzellen und/oder Aufenthaltsgebiete hat, wird eine Überprüfung der mobilstationsseitig und netzseitig vorliegenden Zoneninformationen teilnehmerspezifisch für den jeweiligen mobilen Teilnehmer im Mobilfunknetz initiiert. Dabei startet eine Netzeinrichtung - beispielsweise die Kurznachrichtendiensteinrichtung SMSC - eine Anforderung über den Kurznachrichtendienst an die Mobilstation MS, um die relevanten Daten, die im Teilnehmeridentitätsmodul gespeichert sind, zum Netz zu übermitteln. Die Mobilstation MS startet ihrerseits den Kurznachrichtendienst in Richtung des Mobilfunknetzes und überträgt in einer oder mehreren Kurznachrichten die angeforderten Daten, die anschließend netzseitig ausgewertet werden. Vorzugsweise werden auch die Zoneninformationen von der Vergebührungseinrichtung BC angefordert und auf Identität mit den von der Mobilstation MS empfangenen Daten verglichen. Vorzugsweise übernimmt die Verwaltungseinrichtung CCC diese Funktion. Die Funkzellen und/oder die Aufenthaltsgebiete der definierten Zonen betreffende Änderungen werden netzseitig aufbereitet und entsprechende neue Zoneninformationen der von den Änderungen betroffenen Zonen für die jeweiligen Teilnehmer in der Netzdatenbasis IC und in der Vergebührungseinrichtung BC eingetragen. Eine Aktualisierung der mobilstationsseitig gespeicherten Zoneninformationen erfolgt ebenfalls, indem die neuen Informationen der Mobilstation MS signalisiert und mobilstationsseitig gespeichert werden.

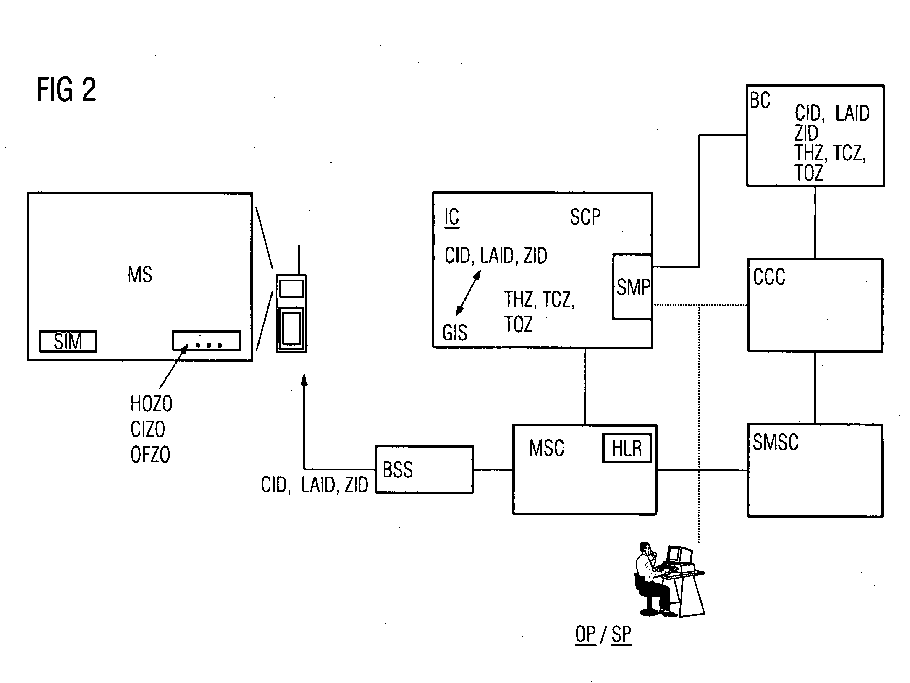

FIG 2 zeigt ein Blockschaltbild der Einrichtungen zur zonenabhängigen Vergebührung der Anrufe mobiler Teilnehmer eines Mobilfunknetzes, wobei im Unterschied zum Blockschaltbild gemäß FIG 1 die Netzdatenbasis IC Bestandteil einer Dienstesteuerungsstelle SCP ist, die die Steuerung von Diensten Intelligenter Netze (IN) unterstützt. Die Dienstesteuerungsstelle SCP ist mit der Mobilvermittlungsstelle MSC und mit der Vergebührungseinrichtung BC verbunden und kann vom Netzbetreiber oder Diensteanbieter Eingaben über die gesonderte Schnittstelle empfangen. Dabei verfügt die Dienstesteuerungsstelle SCP über eine Dienstelogik SMP, zu der bei Erkennen eines Triggers während der Anrufbehandlung in der Mobilvermittlungsstelle MSC verzweigt wird. Zwischen der Mobilvermittlungsstelle MSC und der Dienstesteuerungsstelle SCP besteht eine Kommunikationsschnittstelle, über die Signalisierungsinformationen gemäß dem zentralen Signalisierungsprotokoll (CCS Nr. 7) ausgetauscht werden können. Die zur zonenabhängigen Vergebührung notwendigen Funktionen, wie teilnehmerindividuelle Definition der Zonen, Zuordnung der Zonen zu den geografischen Orten und Zuteilung der Zonentarife, sowie die Information der Vergebührungseinrichtung BC über die eingerichteten Zonen und deren Zonentarife werden beispielsweise von der Dienstelogik SMP ausgeführt. Zu diesem Zweck speichert die Netzdatenbasis IC globale Datentabellen oder Datenlisten mit den Zellenkennungen CID, den Gebietskennungen LAID sowie den Zonenkennungen ZID. Die Tabellen bzw. Listen enthalten weiterhin Zuordnungen zwischen den geografischen Orten und den Zellenkennungen, die durch das Informationssystem GIS ausgewertet werden. Auch die Zonentarife THZ, TCZ, TOZ können eingetragen sein.

Alle Informationen - wie beispielsweise die Zoneninformationen für die Mobilstation MS und die Vergebührungsdaten einschließlich der Zonentarife für die Vergebührungseinrichtung BC - werden anrufbezogen generiert und übertragen. Durch die Anwendung des IN-Konzepts mit der Dienstesteuerungsstelle SCP ist es nicht notwendig, Zoneninformationen mobilstationsseitig im Teilnehmeridentitätsmodul zu speichern. Daher werden von der Dienstelogik SMP abhängig vom Erkennung eines IN-Anrufs in der Mobilvermittlungsstelle MSC teilnehmerspezifisch die Zonen in einer Initialisierungsphase registriert, der Anruf in Bezug auf den Aufenthalt des Teilnehmers in einer seiner Zonen in einer Anrufbehandlungsphase überprüft oder die Zonen für den mobilen Teilnehmer in einer Änderungsphase modifiziert bzw. gelöscht. Die anrufbezogene Signalisierung und Informationsübertragung unter Einbindung der IN-Einrichtung führt dazu, dass eine Information zur Anzeige der jeweiligen Zone an der Mobilstation anrufbezogen von der Dienstelogik SMP zur Mobilstation MS gesendet und eine Zonenkennung ZID zur Identifikation des vorliegenden Zonentyps zur Vergebührungseinrichtung BC zusätzlich zu den von der Dienstesteuerungsstelle SCP ermittelten Datensätzen übermittelt wird.

Sobald die Dienstesteuerungsstelle SCP einen IN-Anruf zum Registrieren der Zonen empfängt, nutzt sie die in einer Signalisierungsnachricht (Initial Detection Point) enthaltenen Informationen, um die aktuelle Funkzelle, in der der mobile Teilnehmer sich befindet und deren Zellenkennung CID zu ermitteln. Diese Zellenkennung wird zur Lokalisierung des Anrufs beispielsweise von der Dienstelogik SMP ausgewertet. Ist die geografische Lokalisierung der Ursprungszelle ausgeführt, kann eine Auswahl der für den anrufenden Teilnehmer einzurichtenden Zonen getroffen werden. Dies erfolgt beispielsweise anhand der gewählten IN-Diensterufnummer (Service Number) oder anhand einer oder mehrerer Ziffern (Digits) der IN-Diensterufnummer. Grundsätzlich können auch andere Auswahlkriterien zur Unterscheidung der einzurichtenden Zonen, im vorliegenden Beispiel der Heimatzone HOCO, der Stadtzone CIZO und der Bürozonen OFZO, benutzt werden. In der Initialisierungsphase überprüft die Dienstelogik SMP, ob die gewünschte Zone bereits definiert ist. Wenn nicht, wird der geografische Ort des mobilen Teilnehmers in Form der Zellenkennung CID der Ursprungszelle in die Liste der Netzdatenbasis IC eingetragen. Andernfalls erhält der mobile Teilnehmer eine Ansage, dass die Zone bereits definiert ist, bevor der Datensatz bezogen auf den Anruf aufgezeichnet und der Anruf ausgelöst wird. Die von Dienstesteuerungsstelle SCP bereitgestellten Datensätze (IN Digits) werden begleitet von statistischen Informationen, die der Netzbetreiber oder der Diensteanbieter für weitere Auswertungen, beispielsweise zur Vergebührung des Initialisierungsschritts, verwenden kann.

Sobald von der Mobilvermittlungsstelle MSC festgestellt wird, dass es sich um einen In-Anruf handelt, erfolgen die Triggerung des Anrufs zur Dienstesteuerungsstelle SCP und eine entsprechende Dienstebehandlung gemäß einem IN-Dienst. Dabei wird die Zellenkennung die Ursprungszelle, aus der der In-Anruf initiiert wurde, ermittelt und die Tabelle bzw. Liste mit den globalen Daten zur Kennzeichnung des geografischen Orts der Ursprungsfunkzelle angesteuert. Der geografische Ort der Ursprungsfunkzelle wird überprüft, ob er innerhalb einer der für den anrufenden mobilen Teilnehmer definierten Zonen liegt. Ist dies der Fall, wird ein entsprechendes Signal netzseitig erzeugt und zur Mobilstation MS ausgesendet. Das ausgesendete Signal kann dabei eine geeignete Information zur Kennzeichnung der aktuell gültigen Zone enthalten, damit die Mobilstation MS - wenn dies vom mobilen Teilnehmer über eine Menüsteuerung der Mobilstation gewünscht ist - die Zone vorzugsweise optisch dem Benutzer anzeigen kann. Im Anschluss an das Aussenden des Signals zur Mobilstation MS erfolgt gemäß dem IN-Dienst durch die Dienstesteuerungsstelle SCP das Aufzeichnen eines Datensatzes, der beispielsweise der Aufenthalt des mobilen Teilnehmers in einer definierten Zone deren Zonenkennung ZID in das Gebührenticket einträgt und weitere Informationen, wie beispielsweise die Teilnehmerrufnummer des B-Teilnehmers, hinzufügt. Die Anrufbehandlungsphase gemäß dem IN-Dienst wird mit einer Bestätigung zur Herstellung einer Anrufverbindung durch die Mobilvermittlungsstelle MSC abgeschlossen.

Analog zur Initialisierungsphase, bei der die Zonen für den mobilen Teilnehmer definiert und registriert werden, kann in einer Modifizierungsphase eine oder mehrere Zonen neu definiert bzw. gelöscht werden. Nach der oben beschriebenen Auswahl der von einer Änderung betroffenen Zonen wird die durch die Zonenkennung identifizierbare Zone durch Hinzufügen von Funkzellenkennungen und/oder Gebietskennungen oder durch Löschen der eingetragenen Kennungen beeinflusst. Dabei erfolgt vor dem Löschen einer Zone jeweils eine Überprüfung, ob die vom Teilnehmer in der Mobilstation MS einzugebende Identifizierungsnummer (PIN, Personal Identifiy Number) geeignet ist, einen Löschvorgang für den mobilen Teilnehmer zu initiieren und damit einen unberechtigten Zugriff Dritter auf die Mobilstation und die für den Teilnehmer registrierten Informationen zu verhindern.

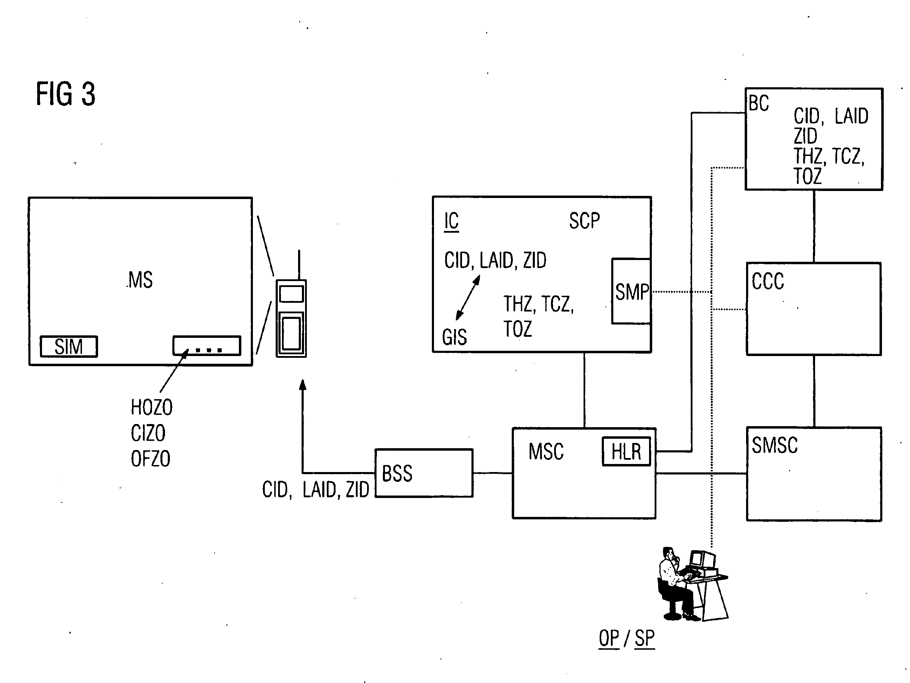

FIG 3 zeigt ein Blockschaltbild der Einrichtungen zur zonenabhängigen Vergebührung der Anrufe mobiler Teilnehmer, wobei im Unterschied zum Blockschaltbild in FIG 2 die Dienstesteuerungsstelle SCP nicht mit der Vergebührungseinrichtung BC direkt verbunden ist. Über die gesonderte Schnittstelle zum Netzbetreiber OP oder Diensteanbieter SP können Eingaben von der Dienstesteuerungsstelle SCP übernommen werden. Sie führt die administrativen Aktivitäten wie zuvor beschrieben aus, mit der Variante, dass alle geeigneten Informationen einschließlich der Zoneninformationen für das Teilnehmeridentitätsmodul SIM der Mobilstation MS und der Vergebührungsdaten einschließlich der Zonentarife via dem Kurznachrichtendienst erzeugt und übertragen werden. Die Initialisierung der teilnehmerindividuell eingerichteten Zonen erfolgt wiederum abhängig vom Erkennen eines IN-Anrufs in der Mobilvermittlungsstelle MSC, so dass Informationen über die definierten Zonen HOZO, CIZO, OFZO und die zugehörigen Zonentarife THZ, TCZ, TOZ - wie bereits zuvor beschrieben - sowohl in der Netzdatenbasis IC als auch in der Vergebührungseinrichtung BC vorliegen. Im Unterschied zur Vorgehensweise gemäß der Beschreibung zu FIG 2 werden die Informationen CID, LAID, ZID in einer oder mehreren Kurznachrichten des Kurznachrichtendienstes zur Mobilstation MS des mobilen Teilnehmers gesendet und mobilstationsseitig gespeichert.

Für die Anrufbehandlung und Anzeige der Zone und der zugehörigen Gebühren an der Mobilstation MS ist ein Zugriff zur Dienstesteuerungsstelle SCP gemäß einem IN-Dienst nicht erforderlich. Zur Anzeige der Zonen und der zugehörigen Gebühren an der Mobilstation MS werden die vorliegenden Zoneninformationen, das heißt die Zellenkennungen CID und/oder Gebietskennungen LAID sowie die Zonenkennung ZID zur Festlegung des Zonentyps ausgewertet und eine entsprechende Anzeige der gültigen Zone mit den darin anfallenden Gebühren auf der Basis des zugehörigen Zonentarifs veranlasst. Dabei ist die kontinuierliche Anzeige der detaillierten Zonen in Realzeit möglich. Die Vergebührungseinrichtung BC ruft die gespeicherten zonenabhängigen Tarife ab und erzeugt anrufbezogene Datensätze in Abhängigkeit der in der jeweils gültigen Zone anfallenden Tarife. Von der Dienstelogik SMP können die Zonen für die mobilen Teilnehmer ebenfalls in eine Änderungsphase modifiziert oder gelöscht werden, wobei neue Informationen netzseitig erzeugt und zu der Mobilstation MS des Teilnehmers in den Kurznachrichten des Kurznachrichtendienstes übertragen und mobilstationsseitig gespeichert werden. Informationen über die für den Teilnehmer individuell eingerichteten Zonen oder über geänderte bzw. gelöschte Zonen werden von der Dienstelogik SMP teilnehmerspezifisch aufbereitet und via Datentransfer über eine gesonderte Datenschnittstelle zur Vergebührungseinrichtung BC und zur Verwaltungseinrichtung CCC übermittelt.

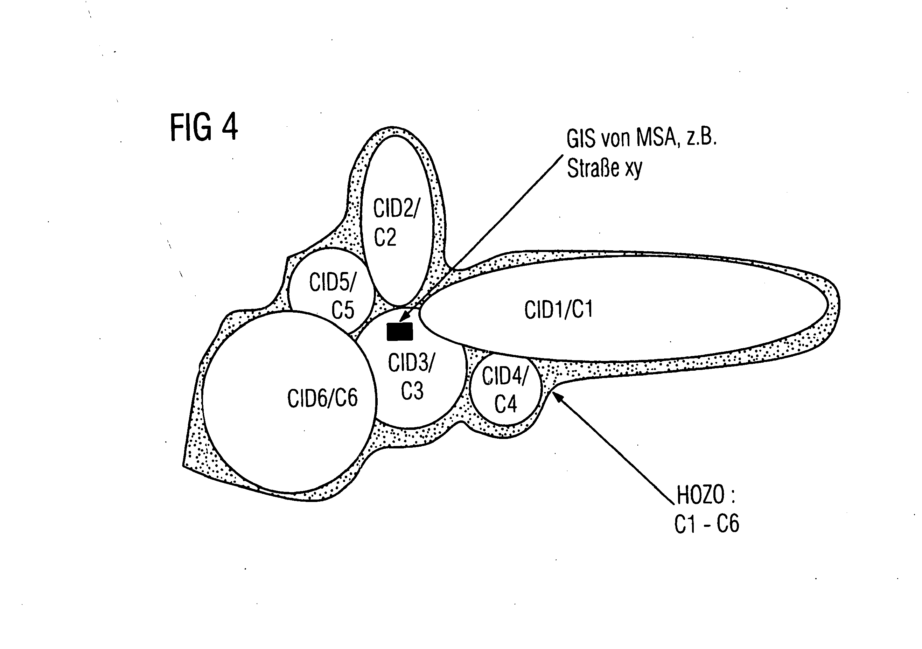

Die FIG 4, 5 und 6 zeigen Beispiele für unterschiedliche Zonen, die für einen mobilen Teilnehmer MSA durch Zusammenfassung von Funkzellen und/oder von Aufenthaltsgebieten definiert sind. FIG 4 zeigt die Ausbildung einer Heimatzone HOCO, bestehend aus mehreren Funkzellen C1, C2...C6 mit den Zellenkennungen CID1, CID2...CID6. Der vom geografischen Informationssystem GIS zu verarbeitende geografische Ort des mobilen Teilnehmers MSA ist beispielsweise die Straße xy seiner Privatadresse, die in der Funkzelle C3 mit der Zellenkennung CID3 liegt. Durch Zuordnung des geografischen Orts des Teilnehmers MSA zu der Heimatzone HOCO kann ein zugehöriger Zonentarif, der beispielsweise für alle Heimatzonen oder zumindest für einen Teil der Heimatzonen festgelegt ist, zur Vergebührung des Anrufs von der Vergebührungseinrichtung verwendet werden. Durch Vergleich der im Funkfeld einer der Funkzellen empfangenen Informationen, bestehend beispielsweise aus der Zellenkennung der Funkzelle, mit den mobilstationsseitig gespeicherten Zoneninformationen kann festgestellt werden, dass sich der mobile Teilnehmer MSA in der Heimatzone HOCO momentan aufhält. Die für ihn gültige Heimatzone HOZO und gegebenenfalls die anfallenden Gebühren können dann an der Mobilstation akustisch oder optisch in Echtzeit angezeigt werden. Grundsätzlich können Heimatzonen im gesamten Funkversorgungsbereich eines Mobilfunknetzes lokalisiert werden, eine Zulassung lediglich bestimmter Netzbereiche für die zonenabhängige Vergebührung der Anrufe kann jedoch dem Netzbetreiber vorbehalten sein.

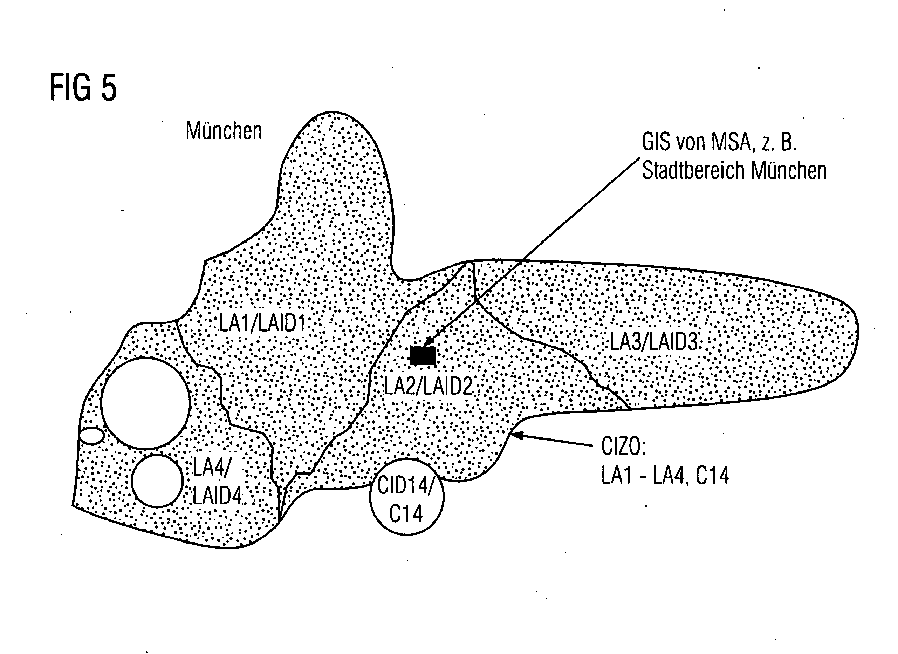

FIG 5 zeigt beispielhaft die Ausbildung einer Stadtzone CIZO, die den Stadtbereich München betrifft. Dabei sind mehrere Aufenthaltsgebiete (Location Areas) LA1, LA2, LA3 und LA4 mit Gebietskennungen LAID1, LAID2, LAID3 und LAID4 sowie eine einzelne Funkzelle C14 mit der Zellenkennung CID14 zu der Stadtzone für den Stadtbereich München zusammengefasst und als Stadtzone CIZO dem Teilnehmer MSA individuell zugeteilt. Es sei angenommen, dass für die Stadtzone CIZO ein anderer Zonentarif als für die Heimatzone gemäß der Darstellung in FIG 4 gilt. Liegen mehrere Zonen ineinander, beispielsweise die Heimatzone in der Stadtzone, so wird die Zone mit dem für den mobilen Teilnehmer günstigeren Zonentarif - beispielsweise prioritätengesteuert - ausgewählt und zur zonenabhängigen Vergebührung der Anrufe ausgewertet. Der geografische Ort des Teilnehmers, dem die Stadtzone CIZO zugeordnet ist, - im vorliegenden Beispiel der Stadtbereich München - kann durch eine geeignete Abbildung der geografischen Daten - Münchens - auf die zellulare Netzstruktur des Mobilfunknetzes festgelegt werden. Üblicherweise weist jedes Aufenthaltsgebiet, erkennbar an der jeweiligen Gebietskennung LAID1 bis LAID4, mehrere Funkzellen auf.

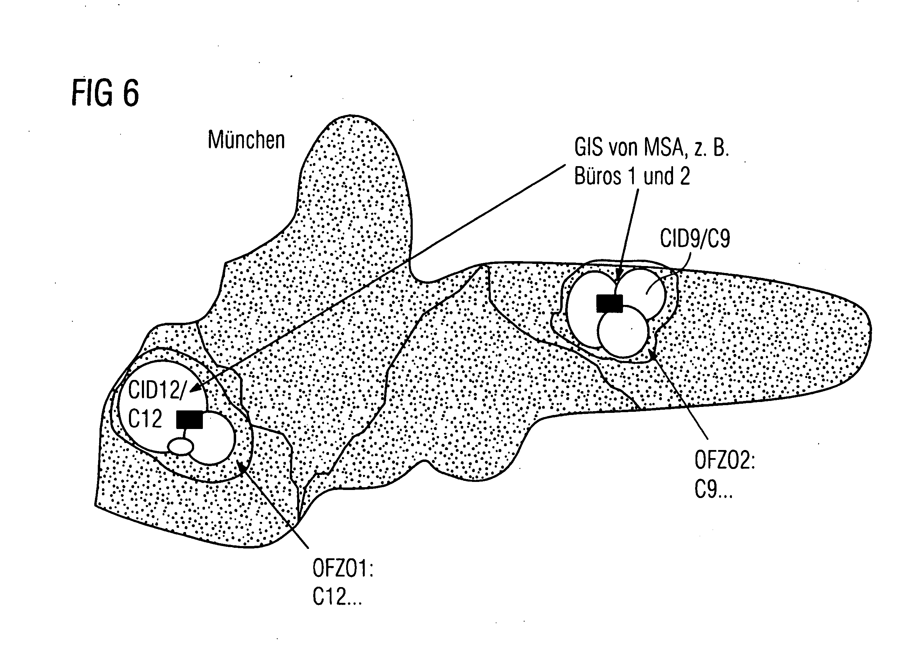

FIG 6 zeigt eine beispielhafte Ausbildung von zwei Bürozonen OFZO1 und OFZ02, die für den mobilen Teilnehmer MSA durch Zusammenfassung von Funkzellen eingerichtet wurden. Dabei befinden sich beide Bürozonen beispielsweise in München und bestehen jeweils aus drei Funkzellen, von denen jeweils eine mit einer Zellenkennung beispielhaft bezeichnet ist. So umfasst die Bürozone OFZO1 die Funkzelle C12 mit der Zellenkennung CID12 und die Bürozone OFZ02 die Funkzelle C9 mit der Zellenkennung CID9. Die Größe der Funkzellen kann dabei sehr unterschiedlich sein, was an der Darstellung gemäß FIG 6 für die beiden Bürozonen OFZO1 und OFZ02 deutlich wird. Für jede der beiden Bürozonen ist ein geografischer Ort, der die Lage der Büros - z.B. mit Straßenname und/oder Hausgebäude - festlegt, angebbar, dem jede Bürozone eindeutig zuordenbar ist.

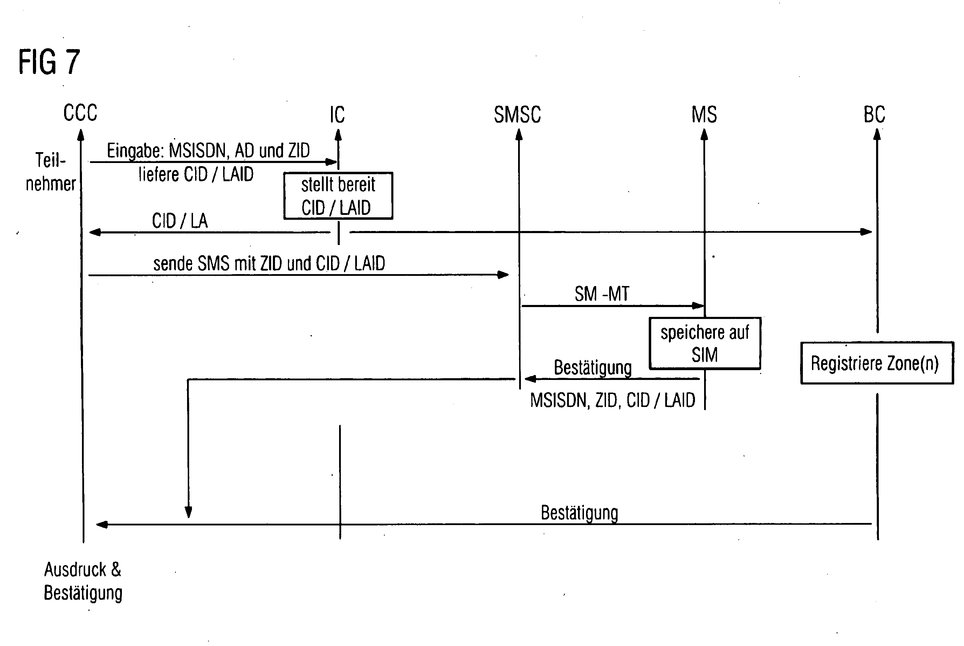

FIG 7 zeigt den Nachrichtenfluss zwischen den Einrichtungen des Mobilfunknetzes und der Mobilstation zum Vorinitialisieren der jeweiligen Zonen durch den Mobilfunknetzbetreiber oder den Diensteanbieter. Die Einrichtungen des Netzes sind die Verwaltungseinrichtung CCC, die Netzdatenbasis IC, die Kurznachrichtendiensteinrichtung SMSC und die Vergebührungseinrichtung BC. Das Endgerät des mobilen Teilnehmers ist die Mobilstation MS. Der mobile Teilnehmer geht zu seinem Netzbetreiber oder Diensteanbieter und übergibt sein Teilnehmeridentitätsmodul (SIM), um bei eingeschalteter und im Mobilfunknetz eingebuchter Mobilstation MS die Prozedur zur Initialisierung/Registrierung der vom Teilnehmer gewünschten Zonen zu starten. Dabei gibt der Netzbetreiber oder Diensteanbieter in die Verwaltungseinrichtung CCC über die gesonderte Schnittstelle die Teilnehmerrufnummer MSISDN des Teilnehmers, den Zonentyp, erkennbar an der Zonenkennung ZID, und einen geographischen Ort AD, der zur Lokalisierung der gewünschten Zonen dient, ein. Diese Informationen werden von der Verwaltungseinrichtung CCC (customer care center) mit einer Aufforderung, Zellenkennungen CID und/oder Gebietskennungen LAID zu übermitteln, an die Netzdatenbasis IC. Die Netzdatenbasis IC stellt die Zellenkennungen CID bzw. Gebietskennungen LAID für die Funkzellen bzw. Aufenthaltsgebiete bereit, die zu den vom Teilnehmer gewünschten Zonen gehören, und sendet sie in einer Nachricht zur Verwaltungseinrichtung CCC zurück. Die Verwaltungseinrichtung CCC sendet daraufhin eine Nachricht zur Kurznachrichtendiensteinrichtung SMSC aus, in der diese aufgefordert wird, eine oder mehrere Kurznachrichten gemäß dem Kurznachrichtendienst SMS (Short Message Service) zur Mobilstation auszusenden. In der von der Verwaltungseinrichtung CCC gesendeten Nachricht sind die Zonenkennung ZID sowie die Zellenkennungen CID bzw. Gebietskennungen LAID enthalten.

Die Kurznachrichtendiensteinrichtung SMSC generiert daraufhin zumindest eine Kurznachricht SM-MT (short message mobile terminated), die die empfangenen Kennungen enthält. Die Mobilstation MS speichert die eintreffenden Informationen - vorzugsweise auf dem Teilnehmeridentitätsmodul SIM - und bestätigt die Speicherung der Informationen, indem eine Bestätigungsnachricht in der Übertragungsrichtung zur Kurznachrichtendiensteinrichtung SMSC rückgesendet wird. Dabei enthält die Bestätigungsnachricht Identifikationsdaten zur Kennzeichnung des Teilnehmers - beispielsweise dessen Teilnehmerrufnummer MSISDN, sowie die Zonenkennung ZID und die mobilstationsseitig gespeicherten Kennungen CID bzw. LAID. Die von der Netzdatenbasis IC bereitgestellten Kennungen CID bzw. LAID werden nicht nur zur Verwaltungseinrichtung CCC, sondern auch zur Vergebührungseinrichtung BC parallel ausgesendet. Die Vergebührungseinrichtung BC registriert die eintreffenden Informationen, so dass die teilnehmerindividuell definierten Zonen auch in der Vergebührungseinrichtung BC vorliegen. Auch die Vergebührungseinrichtung BC sendet eine Bestätigungsnachricht, dass sie Kenntnis von den Informationen über die eingerichteten Zonen hat, zur Verwaltungseinrichtung CCC zurück. Sobald beide Bestätigungsnachrichten von der Kurznachrichtendiensteinrichtung SMSC und der Vergebührungseinrichtung BC in der Verwaltungseinrichtung CCC eintreffen, liefert diese einen Ausdruck und eine Bestätigung der erfolgreichen Initialisierung bzw. Registrierung der vom Teilnehmer gewünschten Zonen zum Netzbetreiber oder Diensteanbieter zurück.

Der Diensteanbieter oder Netzbetreiber kann jederzeit die für den mobilen Teilnehmer definierten Zonen überprüfen, indem er beispielsweise über die Kurznachrichten des Kurznachrichtendienstes die mobilstationsseitig gespeicherten Informationen der eingerichteten Zonen abfragt und gegebenenfalls alte Informationen durch neue Informationen ersetzt bzw. löscht. Eine Aktualisierung der Zoneninformationen erfolgt aber nicht nur mobilstationsseitig, sondern auch netzseitig, um insbesondere die Netzdatenbasis IC und Vergebührungseinrichtung BC auf den neuesten Stand der für den mobilen Teilnehmer definierten Zonen und Zonentarife zu bringen.

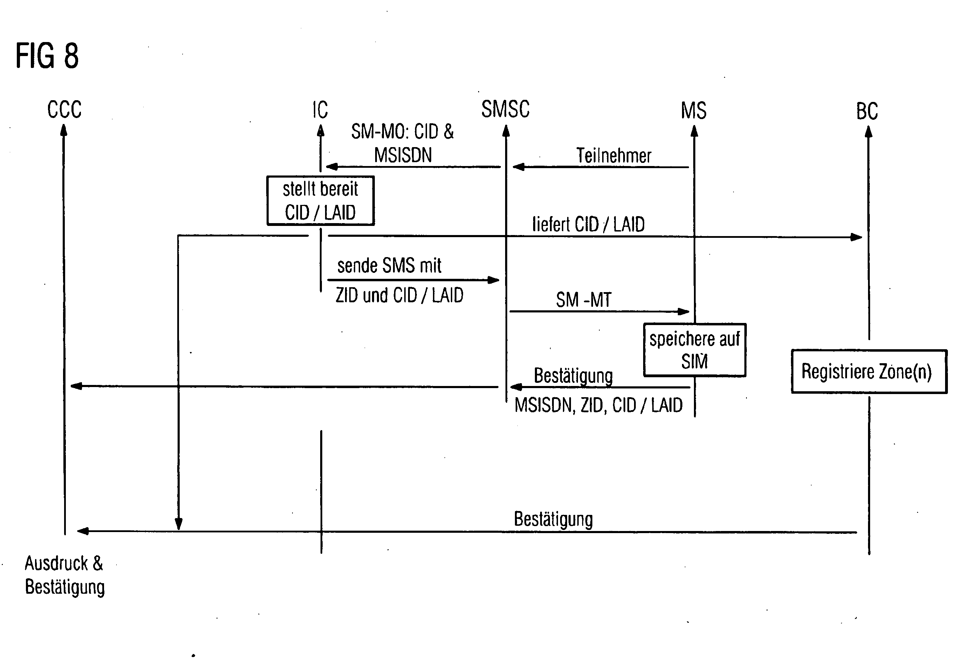

FIG 8 zeigt den Nachrichtenfluss zwischen den in FIG 7 dargestellten Einrichtungen zum Ferninitialisieren der jeweiligen Zonen durch den mobilen Teilnehmer selbst. Dabei definiert der Teilnehmer beispielsweise seine gewünschten Zonen als Heimatzone, Bürozone oder Stadtzone gemäß den Beispielen in den FIG 4 bis 6, indem er über seine Mobilstation MS, die sich an dem jeweiligen geographischen Ort der Zonen befindet, einen Dialog mit dem Mobilfunknetz - beispielsweise menügesteuert an der Mobilstation MS - führt. Drückt der mobile Teilnehmer beispielsweise eine bestimmte Taste an der Mobilstation MS oder gibt er einen bestimmten Befehl zum Senden einer Kurznachricht ein, wird der Kurznachrichtendienst zur Kurznachrichtendiensteinrichtung SMSC gestartet. Diese erzeugt eine oder mehrere Kurznachrichten SM-MO (short message mobile originated), in der die Zellenkennung CID der aktuellen Funkzelle, in der die Mobilstation MS sich befindet, und die Teilnehmerrufnummer MSISDN des mobilen Teilnehmers enthalten sind. Die Kurznachricht richtet sich an die Netzdatenbasis IC mit dem Aufruf, die Kennungen CID bzw. LAID bereit zu stellen. Ist dies geschehen, sendet die Netzdatenbasis IC eine Nachricht zur Kurznachrichtendiensteinrichtung SMSC zurück, in der diese aufgefordert wird, den Kurznachrichtendienst SMS (short message service) zu starten. Die Nachricht zwischen der Netzdatenbasis IC und der Kurznachrichtendiensteinrichtung SMSC enthält zumindest eine Zonenkennung ZID zur Kennzeichnung der gewünschten Zone und die Zellenkennungen CID bzw. Gebietskennungen LAID zur Identifikation der in der ausgewählten Zone liegenden Funkzellen bzw. Aufenthaltsgebiete.

Die Kurznachrichtendiensteinrichtung SMSC sendet eine oder mehrer Kurznachrichten SM-MT mit den jeweiligen Informationen zur Mobilstation MS. Die Mobilstation MS speichert die eintreffenden Informationen auf ihrem Teilnehmeridentitätsmodul SIM und bestätigt das Speichern der Informationen durch Rücksenden einer Bestätigungsnachricht mit Identifikationsdaten - beispielsweise der Teilnehmerrufnummer MSISDN sowie der Kennungen ZID und CID bzw. LAID. Die Kurznachrichtendiensteinrichtung SMSC leitet die Bestätigungsnachricht an die Verwaltungseinrichtung CCC weiter. Ebenso übermittelt die Vergebührungseinrichtung BC nach Erhalt und Speicherung der jeweiligen Kennungen CID bzw. LAID eine Bestätigungsnachricht zur Verwaltungseinrichtung CCC. Ein Ausdruck und eine Bestätigung der für den mobilen Teilnehmer definierten Zonen, deren Informationen vorzugsweise sowohl mobilstationsseitig als auch netzseitig in der Vergebührungseinrichtung BC gespeichert sind, erfolgt an den Netzbetreiber bzw. Diensteanbieter. Eine Bestätigung der erfolgreichen Initialisierung bzw. Registrierung seiner gewünschten Zonen kann der Teilnehmer auch über die Mobilstation MS erhalten, sofern durch den Dialog mit dem Netz eine entsprechende Bestätigungsnachricht - vorzugsweise wiederum über Signalisierungsnachrichten wie beispielsweise die Kurznachrichten des Kurznachrichtendienstes - von der Mobilstation MS empfangen und dem Teilnehmer optisch und/oder akustisch angezeigt wird.

## Patentansprüche

1. Verfahren zur Vergebührung von Anrufen, die von Mobilstationen (MS) mobiler Teilnehmer gesendet und empfangen werden können, in einem Mobilfunknetz mit
- einer aus Funkzellen aufgebauten zellularen Netzstruktur sowie mit
- funktechnischen Einrichtungen (BSS) zum Senden und Empfangen von Signalisierungs- und Nutzinformationen zu und von den Mobilstationen (MS),
- vermittlungstechnischen Einrichtungen (MSC) zum Durchschalten von Signalisierungs- und Nutzverbindungen,
- Speichereinrichtungen (HLR) zum Speichern von Teilnehmerdaten der mobilen Teilnehmer und
- einer Vergebührungseinrichtung (BC) zum Aufzeichnen von anrufbezogenen Datensätzen und zum Ermitteln der jeweiligen Anrufgebühr abhängig von den Datensätzen,
wobei bei dem Verfahren Funkzellen (C1...C6) und/oder Aufenthaltsgebiete (LA1 ...LA4) teilnehmerindividuell zu einer oder mehreren Zonen (HOZO, CIZO, OFZO) zusammengefasst und Zonentarife (THZ, TCZ, TOZ) den Zonen (HOZO, CIZO, OFZO) zugeordnet werden,
wobei von der Vergebührungseinrichtung (BC) jeweils durch eine Nutzdatenbasis (IC) zur Verfügung gestellte Informationen über die für den mobilen Teilnehmer individuell definierten Zonen (HOZO, CIZO, OFZO) und Zonentarife (THZ, TCZ, TOZ) empfangen und bei Aufenthalt des mobilen Teilnehmers in einer der Zonen (HOZO, CIZO, OFZO) zum Ermitteln der jeweiligen Anrufgebühr verwendet werden,
**dadurch gekennzeichnet,**
- **dass** die Zusammenfassung der Funkzellen (C1...C6) und/oder Aufenthaltsgebiete (LA1 ...LA4) zu einer oder mehreren Zonen (HOZO, CIZO, OFZO) teilnehmerindividuell dadurch erfolgt, dass die Zonen (HOZO, CIZO, OFZO) für den mobilen Teilnehmer durch ein geografisches Informationssystem (GIS) jeweils anhand eines geografischen Ortes des mobilen Teilnehmers festgelegt werden,
- **dass** Informationen über die für den mobilen Teilnehmer definierten Zonen (HOZO, CIZO, OFZO) vom Mobilfunknetz zu der Mobilstation (MS) des Teilnehmers gesendet und in der Mobilstation oder in einem Teilnehmeridentitätsmodul (SIM) der Mobilstation gespeichert werden, und
- **dass** von der Mobilstation (MS) bei Einbuchen in das Mobilfunknetz überprüft wird, ob sie sich in einer der für den mobilen Teilnehmer definierten Zonen (HOZO, CIZO, OFZO) aufhält.

2. Verfahren nach Anspruch 1, **dadurch gekennzeichnet, dass** die Informationen zumindest eine Zonenkennung (ZID) zur Identifikation des Zonentyps enthalten.

3. Verfahren nach Anspruch 1 oder 2, **dadurch gekennzeichnet, dass** die Informationen Zellenkennungen (CID) zur Identifikation der Funkzellen und/oder Gebietskennungen (LAID) zur Identifikation der Aufenthaltsgebiete enthalten.

4. Verfahren nach einem der vorhergehenden Ansprüche, **dadurch gekennzeichnet, dass** von der Mobilstation (MS) das Speichern der Informationen dem Mobilfunknetz bestätigt und dabei die für den Teilnehmer gespeicherten Informationen rückgesendet werden.

5. Verfahren nach einem der vorhergehenden Ansprüche, **dadurch gekennzeichnet, dass** die Informationen zwischen dem Mobilfunknetz und der Mobilstation (MS) in Signalisierungsnachrichten übertragen werden.

6. Verfahren nach Anspruch 5, **dadurch gekennzeichnet, dass** die Informationen zwischen einer Kurznachrichtendiensteinrichtung (SMSC) des Mobilfunknetzes und der Mobilstation (MS) in einer oder mehreren Kurznachrichten (SM-MT) eines Kurznachrichtendienstes signalisiert werden.

7. Verfahren nach einem der vorhergehenden Ansprüche, **dadurch gekennzeichnet, dass** die Überprüfung durch Vergleich von über die Luft empfangenen Informationen, die eine Lokalisierung der Mobilstation (MS) in einer identifizierbaren Funkzelle (z.B. C3) oder in einem identifizierbaren Aufenthaltsgebiet (z.B. LA2) ermöglichen, mit den mobilstationsseitig gespeicherten Informationen erfolgt.

8. Verfahren nach einem der vorhergehenden Ansprüche, **dadurch gekennzeichnet, dass** der Aufenthalt der Mobilstation (MS) in einer der Zonen (HOZO, CIZO, OFZO) an der Mobilstation optisch angezeigt oder akustisch mitgeteilt wird.

9. Verfahren nach einem der vorhergehenden Ansprüche, **dadurch gekennzeichnet, dass** abhängig davon, ob sich die Mobilstation (MS) in einer der definierten Zonen (HOZO, CIZO, OFZO) aufhält bzw. nicht aufhält, entsprechende Sicherheitsfunktionen und/oder anrufbezogene Aktionen von der Mobilstation und dem Mobilfunknetz bei Aufenthalt in der Zone unterstützt bzw. bei Abwesenheit in der Zone nicht unterstützt werden.

10. Verfahren nach einem der vorhergehenden Ansprüche, **dadurch gekennzeichnet, dass** bei mehreren ineinanderliegenden Zonen (z.B. HOZO, CIZO) eine Priorisierung der Zonen mit den entsprechenden Zonentarifen zur Vergebührung erfolgt.

11. Verfahren nach einem der vorhergehenden Ansprüche, **dadurch gekennzeichnet, dass** der für eine definierte Zone gültige Zonentarif (z.B. THZ) einen Basistarif und einen distanzabhängigen Tarif, der die Aufenthaltsorte des anrufenden Teilnehmers und/oder des angerufenen Teilnehmers berücksichtigt, umfasst.

12. Verfahren nach einem der vorhergehenden Ansprüche, **dadurch gekennzeichnet, dass** netzseitig eine Überprüfung der in der Mobilstation (MS) und in der Vergebührungseinrichtung (BC) vorliegenden Informationen über die definierten Zonen (HOZO, CIZO, OFZO) teilnehmerspezifisch für den jeweiligen mobilen Teilnehmer initiiert wird und dabei die Informationen von der Mobilstation und der Vergebührungseinrichtung angefordert und ausgewertet werden.

13. Verfahren nach einem der vorhergehenden Ansprüche, **dadurch gekennzeichnet, dass** Änderungen der Netzstruktur bezogen auf die Funkzellen (z.B. C1...C6) und/oder die Aufenthaltsgebiete (z.B. LA1...LA4) netzseitig berücksichtigt und neue Informationen zur Kennzeichnung der von den Änderungen betroffenen Zonen (z.B. HOZO, CIZO) für die jeweiligen mobilen Teilnehmer eingetragen werden.

14. Verfahren nach Anspruch 13, **dadurch gekennzeichnet, dass** die neuen Informationen zu der Mobilstation (MS) gesendet und mobilstationsseitig gespeichert werden.

15. Verfahren nach Anspruch 12, 13 oder 14, **dadurch gekennzeichnet, dass** die Informationen zwischen einer Kurznachrichtendiensteinrichtung (SMSC) des Mobilfunknetzes und der Mobilstation (MS) in einer oder mehreren Kurznachrichten (SM-MT) eines Kurznachrichtendienstes signalisiert werden.

16. Verfahren nach Anspruch 15, **dadurch gekennzeichnet, dass** netzseitig eine Verwaltungseinrichtung (CCC) oder die Netzdatenbasis (IC) die zur Initialisierung erforderlichen Informationen empfängt und zur Mobilstation (MS) aussendet.

17. Verfahren nach Anspruch 1, **dadurch gekennzeichnet, dass** die teilnehmerindividuelle Definition der Zonen (HOZO, CIZO, OFZO) und deren Zuordnung zu geographischen Orten sowie die Zuteilung der Zonentarife (THZ, TCZ, TOZ) in einer Netzdatenbasis (IC) einer die Steuerung von Diensten Intelligenter Netze (IN) unterstützenden Dienstesteuerungsstelle (SCP) gespeichert wird.

18. Verfahren nach Anspruch 17, **dadurch gekennzeichnet, dass** die Dienstesteuerungsstelle (SCP) eine Dienstelogik (SMP) enthält, die abhängig vom Erkennen eines IN-Anrufs in einer Vermittlungseinrichtung (MSC) des Mobilfunknetzes teilnehmerspezifisch
- die Zonen (HOZO, CIZO, OFZO) für den anrufenden mobilen Teilnehmer in einer Initialisierungsphase registriert oder
- den Anruf in Bezug auf den Aufenthalt der Mobilstation (MS) in einer seiner definierten Zonen in einer Anrufbehandlungsphase überprüft oder
- die Zonen für den anrufenden mobilen Teilnehmer in einer Änderungsphase modifiziert bzw. löscht.

19. Verfahren nach Anspruch 18, **dadurch gekennzeichnet, dass** bei Aufenthalt der Mobilstation (MS) in einer der definierten Zonen (HOZO, CIZO, OFZO) von der Dienstelogik (SMP)
- eine Information zur Anzeige der Zone (z.B. HOZO) zur Mobilstation (MS) gesendet wird und
- zusätzlich zu den Datensätzen eine Zonenkennung (ZID) zur Identifikation des Zonentyps zur Vergebührungseinrichtung (BC) übermittelt wird.

20. Verfahren nach Anspruch 18 oder 19, **dadurch gekennzeichnet, dass** auf Grund des IN-Anrufs die Zellenkennung (z.B. CID3) der aktuellen Funkzelle (z.B. C3), in der sich der mobile Teilnehmer befindet, von der Dienstelogik (SMP) ermittelt und zur Lokalisierung des Anrufs ausgewertet wird, und dass abhängig von der Lokalisierung des Anrufs entweder eine Auswahl der einzurichtenden Zone (z.B. HOZO) in der Initialisierungsphase getroffen oder die Funkzelle (z.B. C3) auf die Zugehörigkeit zu einer definierten Zone (z.B. HOZO) in der Anrufbehandlungsphase überprüft wird.

21. Verfahren nach Anspruch 20, **dadurch gekennzeichnet, dass** die Zonen (HOZO, CIZO, OFZO) anhand der vom mobilen Teilnehmer gewählten IN-Diensterufnummer oder anhand einer oder mehrerer Ziffern der IN-Diensterufnummer ausgewählt werden.

22. Verfahren nach einem der Ansprüche 17 bis 21, **dadurch gekennzeichnet, dass** in der Dienstesteuerungsstelle (SCP) eine Liste der Zuordnungen zwischen geographischen Orten und Zellenkennungen zur Identifikation der Funkzellen und/oder Gebietskennungen zur Identifikation der Aufenthaltsgebiete gespeichert wird.

23. Verfahren nach Anspruch 17, **dadurch gekennzeichnet, dass** die Dienstesteuerungsstelle (SCP) eine Dienstelogik (SMP) enthält, die abhängig vom Erkennen eines IN-Anrufs in einer Vermittlungseinrichtung (MSC) des Mobilfunknetzes teilnehmerspezifisch die Zonen (HOZO, CIZO, OFZO) für den anrufenden mobilen Teilnehmer in einer Initialisierungsphase registriert und Informationen über die für den Teilnehmer definierten Zonen bereitstellt, die in einer oder mehreren Kurznachrichten (SM-MT) des Kurznachrichtendienstes zu der Mobilstation (MS) des Teilnehmers gesendet und mobilstationsseitig gespeichert werden.

24. Verfahren nach Anspruch 23, **dadurch gekennzeichnet, dass** von der Dienstelogik (SMP) die Zonen (HOZO, CIZO, OFZO) für den mobilen Teilnehmer in einer Änderungsphase modifiziert bzw. gelöscht werden und neue Informationen zur Mobilstation (MS) des Teilnehmers gesendet und mobilstationsseitig gespeichert werden.

25. Verfahren nach Anspruch 23 oder 24, **dadurch gekennzeichnet, dass** von der Dienstelogik (SMP) teilnehmerspezifisch Informationen über die initialisierten Zonen oder über geänderte bzw. gelöschte Zonen zur Vergebührungseinrichtung (BC) gesendet und in der Vergebührungseinrichtung (BC) gespeichert werden.

26. Mobilfunknetz zur Vergebührung von Anrufen, die von Mobilstationen (MS) mobiler Teilnehmer gesendet und empfangen werden können, mit
- einer aus Funkzellen aufgebauten zellularen Netzstruktur sowie mit
- funktechnischen Einrichtungen (BSS) zum Senden und Empfangen von Signalisierungs- und Nutzinformationen zu und von den Mobilstationen,
- vermittlungstechnischen Einrichtungen (MSC) zum Durchschalten von Signalisierungs- und Nutzverbindungen,
- Speichereinrichtungen (HLR) zum Speichern von Teilnehmerdaten der mobilen Teilnehmer,
- einer Vergebührungseinrichtung (BC) zum Aufzeichnen von anrufbezogenen Datensätzen und zum Ermitteln der jeweiligen Anrufgebühr abhängig von den Datensätzen,
- einer oder mehreren Zonen (HOZO, CIZO, OFZO), zu denen Funkzellen (C1...C6) und/oder Aufenthaltsgebiete (LA1 ...LA4) teilnehmerindividuell zusammengefasst und denen Zonentarife (THZ, TCZ, TOZ) zugeordnet sind, und mit
- einer Netzdatenbasis (IC), die Informationen über jeweils für den mobilen Teilnehmer teilnehmerindividuell definierte Zonen (HOZO, CIZO, OFZO) mit zugehörigen Zonentarifen speichert und diese Informationen der Vergebührungseinrichtung (BC) zum Ermitteln der jeweiligen Anrufgebühr bei Aufenthalt des mobilen Teilnehmers in einer der Zonen zur Verfügung stellt,
**gekennzeichnet durch**
- ein geografisches Informationssystem (GIS), das die Zonen (HOZO, CIZO, OFZO) jeweils anhand eines geografischen Ortes des mobilen Teilnehmers teilnehmerindividuell festlegt,
sowie **dadurch**,
- dass Informationen über die für den mobilen Teilnehmer definierten Zonen (HOZO, CIZO, OFZO) vom Mobilfunknetz zu der Mobilstation (MS) des Teilnehmers sendbar und in der Mobilstation oder in einem Teilnehmeridentitätsmodul (SIM) der Mobilstation speicherbar sind, und
- dass von der Mobilstation (MS) bei Einbuchen in das Mobilfunknetz überprüfbar ist, ob sie sich in einer der für den mobilen Teilnehmer definierten Zonen (HOZO, CIZO, OFZO) aufhält.

27. Mobilfunknetz nach Anspruch 26, **dadurch gekennzeichnet, dass** die Netzdatenbasis (IC) in einer die Steuerung von Diensten Intelligenter Netze (IN) unterstützenden Dienstesteuerungsstelle (SCP) gespeichert ist.

28. Mobilfunknetz nach Anspruch 27, **dadurch gekennzeichnet, dass** die Dienstesteuerungsstelle (SCP) eine Dienstelogik (SMP) aufweist, die abhängig vom Erkennen eines IN-Anrufs in einer Vermittlungseinrichtung (MSC) des Mobilfunknetzes teilnehmerspezifisch
- die Zonen (HOZO, CIZO, OFZO) für den anrufenden mobilen Teilnehmer in einer Initialisierungsphase registriert oder
- den Anruf in Bezug auf den Aufenthalt der Mobilstation (MS) in einer seiner definierten Zonen in einer Anrufbehandlungsphase überprüft oder
- die Zonen für den anrufenden mobilen Teilnehmer in einer Änderungsphase modifiziert bzw. löscht.

29. Mobilfunknetz nach Anspruch 27, **dadurch gekennzeichnet, dass** die Dienstesteuerungsstelle (SCP) eine Dienstelogik (SMP) aufweist, die abhängig vom Erkennen eines IN-Anrufs in einer Vermittlungseinrichtung (MSC) des Mobilfunknetzes teilnehmerspezifisch die Zonen (HOZO, CIZO, OFZO) für den anrufenden mobilen Teilnehmer in einer Initialisierungsphase registriert und Informationen über die für den Teilnehmer definierten Zonen bereitstellt, die in einer oder mehreren Kurznachrichten (SM-MT) des Kurznachrichtendienstes zu der Mobilstation (MS) des Teilnehmers gesendet und mobilstationsseitig gespeichert werden.

30. Mobilstation (MS) zum Senden und Empfangen von Anrufen mobiler Teilnehmer eines Mobilfunknetzes mit einer aus Funkzellen aufgebauten zellularen Netzstruktur, wobei Funkzellen (C1...C6) und/oder Aufenthaltsgebiete (LA1...LA4) zu einer oder mehreren Zonen (HOZO, CIZO, OFZO) zusammengefasst und Zonentarife (THZ, TCZ, TOZ) den Zonen (HOZO CIZO, OFZO) zugeordnet sind,
**gekennzeichnet durch**
Mittel zur Speicherung von netzseitig **durch** eine Netzdatenbasis (IC) gesendeten Informationen über Zonen (HOZO, CIZO, OFZO), die für den mobilen Teilnehmer jeweils **durch** ein geografisches Informationssystem (GIS) anhand eines geografischen Ortes des mobilen Teilnehmers teilnehmerindividuell festgelegt sind sowie Mittel zur Überprüfung, beim Einbuchen in das Mobilfunknetz, ob sich die Mobilstation (MS) in einer der für den mobilen Teilnehmer definierten Zonen (HOZO, CIZO, OFZO) aufhält.

31. Mobilstation nach Anspruch 30, **dadurch gekennzeichnet, dass** sie optische oder akustische Mittel zum Anzeigen oder Mitteilen des Aufenthalts der Mobilstation (MS) in einer der definierten Zonen (HOZO, CIZO, OFZO) aufweist.

32. Mobilstation nach Anspruch 30 oder 31, **dadurch gekennzeichnet, dass** sie optische Mittel zum Anzeigen der für den mobilen Teilnehmer aktuell gültigen Zone (z.B. HOZO) aufweist.

## Claims

1. Method for billing calls, which can be transmitted to and received by mobile stations (MS) of mobile subscribers, in a mobile network comprising
- a cellular network structure formed from radio cells, and comprising
- radio arrangements (BBS) for transmitting and receiving signalling information and usage information to and from the mobile stations (MS),
- switching centres (MSC) for connecting signalling connections and usage connections,
- storage arrangements (HLR) for storing subscriber data of the mobile subscribers, and
- a billing centre (BC) for recording call-related data records and for establishing the respective call pricing depending on the data records,
radio cells (C1...C6) and/or subscriber-specific location areas (LA1...LA4) being combined in the method to form one or more zones (HOZO, CIZO, OFZO), and zone tariffs (THZ, TCZ, TOZ) being assigned to the zones (HOZO, CIZO, OFZO),
information regarding the zones (HOZO, CIZO, OFZO) defined individually for the mobile subscribers and zone tariffs (THZ, TCZ, TOZ) made available by a network database (IC) being received by the billing centre (BC) and being used to establish the respective call pricing when the mobile subscriber is located in one of the zones (HOZO, CIZO, OFZO),
**characterised in that**
- the combination of the radio cells (C1...C6) and/or location areas (LA1...LA4) to form one or more zones (HOZO, CIZO, OFZO) takes place in a subscriber-specific manner such that the zones (HOZO, CIZO, OFZO) for the mobile subscriber are determined by a geographical information system (GIS), in each case on the basis of a geographical location of the mobile subscriber,
- **in that** information regarding the zones (HOZO, CIZO, OFZO) defined for the mobile subscriber are transmitted from the mobile network to the mobile station (MS) of the subscriber and are stored in the mobile station or in a subscriber identity module (SIM) of the mobile station, and
- **in that**, when logging in to the mobile network, the mobile station (MS) checks whether it is located in one of the zones (HOZO, CIZO, OFZO) defined for the mobile subscriber.

2. Method according to claim 1, **characterised in that** the information contains at least one zone identity (ZID) for identification of the zone type.

3. Method according to claim 1 or 2, **characterised in that** the information contains cell identity (CID) for identification of the radio cells and/or area identity (LAID) for identification of the location areas.

4. Method according to one of the preceding claims, **characterised in that** the storage of the information is confirmed to the mobile network by the mobile station (MS) and the information stored for the subscriber is sent back.

5. Method according to one of the preceding claims, **characterised in that** the information is transferred between the mobile network and the mobile station (MS) in signalling messages.

6. Method according to claim 5, **characterised in that** the information is signalled between a short message service centre (SMSC) of the mobile network and the mobile station (MS) in one or more short messages (SM-MT) of a short message service.

7. Method according to one of the preceding claims, **characterised in that** the check is carried out by comparing information which is received through the air and which allows localisation of the mobile station (MS) in an identifiable radio cell (for example C3) or in an identifiable location area (for example LA2) with the information stored on the mobile station side.

8. Method according to one of the preceding claims, **characterised in that** the location of the mobile station (MS) in one of the zones (HOZO, CIZO, OFZO) is displayed visually at the mobile station or is communicated acoustically.

9. Method according to one of the preceding claims, **characterised in that**, depending on whether the mobile station (MS) is located or is not located in one of the defined zones (HOZO, CIZO, OFZO), corresponding safety functions and/or call-related actions are supported by the mobile station and by the mobile network during location in the zone and are not supported during absence from the zone.

10. Method according to one of the preceding claims, **characterised in that**, with a plurality of zones arranged within one another (for example HOZO, CIZO), the zones having the corresponding zone tariffs for billing are prioritised.

11. Method according to one of the preceding claims, **characterised in that** the zone tariff (for example THZ) valid for a defined zone comprises a base tariff and a distance-dependent tariff, which takes into consideration the location of the subscriber to be called and/or of the calling subscriber.

12. Method according to one of the preceding claims, **characterised in that** the checking of the information regarding the defined zones (HOZO, CIZO, OFZO) provided in the mobile station (MS) and in the billing centre (BC) is initiated on the network side in a subscriber-specific manner for the respective mobile subscriber, and the information is requested and evaluated by the mobile station and by the billing centre.

13. Method according to one of the preceding claims, **characterised in that** changes to the network structure based on the radio cells (for example C1...C6) and/or the location areas (for example LA1...LA4) are taken into consideration on the network side and new information for identifying the zones (for example HOZO, CIZO) affected by the changes are recorded for the respective mobile subscriber.

14. Method according to claim 13, **characterised in that** the new information is sent to the mobile station (MS) and is stored on the mobile station side.

15. Method according to claim 12, 13 or 14, **characterised in that** the information is signalled between a short message service centre (SMSC) of the mobile network and the mobile station (MS) in one or more short messages (SM-MT) of a short message service.

16. Method according to claim 15, **characterised in that** a customer care centre (CCC) or the network database (IC) receives the information required for initialisation on the network side and transmits it to the mobile station (MS).

17. Method according to claim 1, **characterised in that** the subscriber-specific definition of the zones (HOZO, CIZO, OFZO) and the assignment thereof to geographical locations and the allocation of the zone tariffs (THZ, TCZ, TOZ) is stored in a network database (IC) of a service control point (SCP) supporting the control of intelligent network (IN) services.

18. Method according to claim 17, **characterised in that** the service control point (SCP) contains a service logic (SMP), which, depending on the identification of an IN call in a switching centre (MSC) of the mobile network and in a subscriber-specific manner,
- records the zones (HOZO, CIZO, OFZO) for the calling mobile subscriber in an initialisation phase, or
- checks the call with regard to the location of the mobile station (MS) in one of its defined zones in a call processing phase, or
- modifies or deletes the zones for the calling mobile subscriber in a modification phase.

19. Method according to claim 18, **characterised in that**, when the mobile station (MS) is located in one of the defined zones (HOZO, CIZO, OFZO), the service logic (SMP)
- transmits information displaying the zone (for example HOZO) to the mobile station (MS), and
- transfers a zone identity (ZID) for identification of the zone type to the billing centre (BC) in addition to the data records.

20. Method according to claim 18 or 19, **characterised in that**, due to the IN call, the cell identity (for example CID3) of the current radio cell (for example C3) in which the mobile subscriber is located is established by the service logic (SMP) and is evaluated for localisation of the call, and **in that**, depending on the localisation of the call, either a selection of the zone to be established (for example HOZO) is made in the initialisation phase, or the radio cell (for example C3) is checked for affiliation to a defined zone (for example HOZO) in the call processing phase.

21. Method according to claim 20, **characterised in that** the zones (HOZO, CIZO, OFZO) are selected on the basis of the IN service number selected by the mobile subscriber or on the basis of one or more digits of the IN service number.

22. Method according to one of claims 17 to 21, **characterised in that** a list of the allocations between geographical locations and cell identities for identification of the radio cells and/or area identities for identification of the location areas is stored in the service control point (SCP).

23. Method according to claim 17, **characterised in that** the service control point (SCP) contains a service logic (SMP), which records the zones (HOZO, CIZO, OFZO), in a subscriber-specific manner, for the calling mobile subscriber in an initialisation phase depending on the identity of an IN call in a switching centre (MSC) of the mobile network and provides information regarding the zones defined for the subscriber, said information being transmitted to the mobile station (MS) of the subscriber in one or more short messages (SM-MT) of the short message service and being stored on the mobile station side.

24. Method according to claim 23, **characterised in that** the zones (HOZO, CIZO, OFZO) for the mobile subscriber are modified or deleted by the service logic (SMP) in a modification phase, and new information is transmitted to the mobile station (MS) of the subscriber and is stored on the mobile station side.

25. Method according to claim 23 or 24, **characterised in that** subscriber-specific information regarding the initialised zones or regarding changed or deleted zones is transmitted by the service logic (SMP) to the billing centre (BC) and is stored in the billing centre (BC).

26. Mobile network for billing calls, which can be transmitted to and received by mobile stations (MS) of mobile subscribers, said network comprising
- a cellular network structure formed from radio cells, and comprising
- radio arrangements (BSS) for transmitting and receiving signalling information and usage information to and from the mobile stations,
- switching centres (MSC) for connecting signalling connections and usage connections,
- storage arrangements (HLR) for storing subscriber data of the mobile subscribers, and
- a billing centre (BC) for recording call-related data records and for establishing the respective call pricing depending on the data records,
- one or more zones (HOZO, CIZO, OFZO) formed by the subscriber-specific combination of radio cells (C1...C6) and/or location areas (LA1...LA4) and assigned zone tariffs (THZ, TCZ, TOZ), and comprising
- a network database (IC), which stores information regarding zones (HOZO, CIZO, OFZO) defined in a subscriber-specific manner for the mobile subscriber and having associated zone tariffs, and provides this information to the billing centre (BC) to establish the respective call pricing when the mobile subscriber is located in one of the zones,
**characterised by**
- a geographical information system (GIS), which determines the zones (HOZO, CIZO, OFZO) in a subscriber-specific manner and in each case on the basis of a geographical location of the mobile subscriber,
and in that
- information regarding the zones (HOZO, CIZO, OFZO) defined for the mobile subscriber can be transmitted from the mobile network to the mobile station (MS) of the subscriber and can be stored in the mobile station or in a subscriber identity module (SIM) of the mobile station, and
- in that when logging in to the mobile network, the mobile station (MS) can check whether it is located in one of the zones (HOZO, CIZO, OFZO) defined for the mobile subscriber.

27. Mobile network according to claim 26, **characterised in that** the network database (IC) is stored in a service control point (SCP) supporting the control of intelligent network (IN) services.

28. Mobile network according to claim 27, **characterised in that** the service control point (SCP) has a service logic (SMP), which, depending on the identity of an IN call in a switching centre (MSC) of the mobile network and in subscriber-specific manner,
- records the zones (HOZO, CIZO, OFZO) for the calling subscriber in an initialisation phase, or
- checks the call with regard to the location of the mobile station (MS) in one of its defined zones in a call processing phase, or
- modifies or deletes the zones for the calling mobile subscriber in a modification phase.

29. Mobile network according to claim 27, **characterised in that** the service control point (SCP) has a service logic (SMP), which records the zones (HOZO, CIZO, OFZO), in a subscriber-specific manner, for the calling mobile subscriber in an initialisation phase depending on the identity of an IN call in a switching centre (MSC) of the mobile network and provides information regarding the zones defined for the subscriber, said information being transmitted to the mobile station (MS) in one or more short messages (SM-MT) of the short message service and being stored on the mobile station side.

30. Mobile station (MS) for transmitting and receiving calls of mobile subscribers of a mobile network and comprising a cellular network structure formed from radio cells, radio cells (C1...C6) and/or location areas (LA1...LA4) being combined to form one or more zones (HOZO, CIZO, OFZO) and zone tariffs (THZ, TCZ, TOZ) being assigned to the zones (HOZO, CIZO, OFZO),
**characterised by**
means for storing information, transmitted on the network side by a network database (IC), regarding zones (HOZO, CIZO, OFZO), which is determined for the mobile subscriber by a geographical information system (GIS) on the basis of a geographical location of the mobile subscriber, as well as means for checking, when logging in to the mobile network, whether the mobile station (MS) is located in one of the zones (HOZO, CIZO, OFZO) defined for the mobile subscriber.

31. Mobile station according to claim 30, **characterised in that** it has visual or acoustic means for displaying or communicating the location of the mobile station (MS) in one of the defined zones (HOZO, CIZO, OFZO).

32. Mobile station according to claim 30 or 31, **characterised in that** it has visual means for displaying the zone (for example HOZO) currently valid for the mobile subscriber.

## Revendications

1. Procédé de taxation des appels que des stations mobiles (MS) d'abonnés mobiles peuvent envoyer et recevoir dans un réseau de téléphonie mobile, avec
- une structure de réseau cellulaire composée de cellules radio, ainsi qu'avec
- des équipements radiotechniques (BSS) pour envoyer et recevoir des informations de signalisation et de charge utile à destination et en provenance des stations mobiles (MS),
- des équipements de commutation (MSC) pour connecter des communications de signalisation et de charge utile,
- des équipements de mémoire (HLR) pour sauvegarder des données d'abonné des abonnés mobiles, et
- un équipement de taxation (BC) pour enregistrer des enregistrements concernant les appels et pour déterminer la taxe d'appel respective en fonction des enregistrements,
dans lequel dans le procédé, des cellules radio (C1 ... C6) et/ou des régions de séjour (LA1 ... LA4) sont regroupées individuellement par abonné en une ou plusieurs zones (HOZO, CIZO, OFZO) et des tarifs de zone (THZ, TCZ, TOZ) sont affectés aux zones (HOZO, CIZO, OFZO),
dans lequel l'équipement de taxation (BC) reçoit respectivement des informations mises à disposition par une base de données de réseau (IC) et concernant les zones (HOZO, CIZO, OFZO) et les tarifs de zone (THZ, TCZ, TOZ) définis individuellement pour l'abonné mobile, et les utilise pour déterminer la taxe d'appel respective lorsque l'abonné mobile séjourne dans l'une des zones (HOZO, CIZO, OFZO),
**caractérisé en ce que**
- le regroupement des cellules radio (C1 ... C6) et/ou des régions de séjour (LA1 ... LA4) en une ou plusieurs zones (HOZO, CIZO, OFZO) est effectué individuellement par abonné **en ce que** les zones (HOZO, CIZO, OFZO) pour l'abonné mobile sont fixées par un système d'informations géographiques (GIS) respectivement à l'aide d'un lieu géographique de l'abonné mobile,
- des informations concernant les zones (HOZO, CIZO, OFZO) définies pour l'abonné mobile sont envoyées du réseau de téléphonie mobile à la station mobile (MS) de l'abonné et sauvegardées dans la station mobile ou dans le module d'identité d'abonné (SIM) de la station mobile, et
- lorsque la station mobile (MS) se connecte au réseau de téléphonie mobile, elle vérifie si elle séjourne dans l'une des zones (HOZO, CIZO, OFZO) définies pour l'abonné mobile.

2. Procédé selon la revendication 1, **caractérisé en ce que** les informations contiennent au moins une identification de zone (ZID) pour identifier le type de zone.

3. Procédé selon la revendication 1 ou 2, **caractérisé en ce que** les informations contiennent des identifications de cellule (CID) pour identifier les cellules radio et/ou des identifications de région (LAID) pour identifier les régions de séjour.

4. Procédé selon l'une quelconque des revendications précédentes, **caractérisé en ce que** la station mobile (MS) confirme au réseau de téléphonie mobile la sauvegarde des informations et renvoie alors les informations sauvegardées pour l'abonné.

5. Procédé selon l'une quelconque des revendications précédentes, **caractérisé en ce que** les informations sont transmises entre le réseau de téléphonie mobile et la station mobile (MS) dans des messages de signalisation.

6. Procédé selon la revendication 5, **caractérisé en ce que** les informations entre un équipement de service de messages courts (SMSC) du réseau de téléphonie mobile et la station mobile (MS) sont signalées dans un ou plusieurs messages courts (SM-MT) d'un service de messages courts.

7. Procédé selon l'une quelconque des revendications précédentes, **caractérisé en ce que** la vérification au moyen d'une comparaison d'informations reçues par voie aérienne qui permettent de localiser la station mobile (MS) dans une cellule radio identifiable (par exemple C3) ou dans une région de séjour identifiable (par exemple LA2) est effectuée à l'aide des informations sauvegardées du côté de la station mobile.

8. Procédé selon l'une quelconque des revendications précédentes, **caractérisé en ce que** le séjour de la station mobile (MS) dans l'une des zones (HOZO, CIZO, OFZO) est affichée visuellement ou signalée acoustiquement sur la station mobile.

9. Procédé selon l'une quelconque des revendications précédentes, **caractérisé en ce qu'**en fonction du fait que la station mobile (MS) séjourne dans l'une des zones définies (HOZO, CIZO, OFZO) ou non, des fonctions de sécurité et/ou des actions concernant l'appel correspondantes sont prises en charge par la station mobile et le réseau de téléphonie mobile en cas de séjour dans la zone ou ne sont pas prises en charge en cas d'absence de la zone.

10. Procédé selon l'une quelconque des revendications précédentes, **caractérisé en ce que** dans le cas de plusieurs zones imbriquées (par exemple HOZO, CIZO), un classement des zones par priorité est effectué avec les tarifs de zone correspondants pour la taxation.

11. Procédé selon l'une quelconque des revendications précédentes, **caractérisé en ce que** le tarif de zone (par exemple THZ) valable pour une zone définie comprend un tarif de base et un tarif en fonction de la distance tenant compte des lieux de séjour de l'abonné appelant et/ou de l'abonné appelé.

12. Procédé selon l'une quelconque des revendications précédentes, **caractérisé en ce que** du côté du réseau, une vérification des informations présentes dans la station mobile (MS) et dans l'équipement de taxation (BC) et concernant les zones définies (HOZO, CIZO, OFZO) est initialisée spécifiquement par abonné pour l'abonné mobile respectif, et les informations sont alors demandées à la station mobile et à l'équipement de taxation et évaluées.

13. Procédé selon l'une quelconque des revendications précédentes, **caractérisé en ce que** des modifications de la structure de réseau concernant les cellules radio (par exemple C1 ... C6) et/ou les régions de séjour (par exemple LA1 ... LA4) sont prises en compte côté réseau, et de nouvelles informations pour identifier des zones affectées par les modifications (par exemple HOZO, CIZO) sont inscrites pour l'abonné mobile respectif.

14. Procédé selon la revendication 13, **caractérisé en ce que** les nouvelles informations sont envoyées à la station mobile (MS) et sauvegardées du côté de la station mobile.

15. Procédé selon la revendication 12, 13 ou 14, **caractérisé en ce que** les informations sont signalisées entre un équipement de service de messages courts (SMSC) du réseau de téléphonie mobile et la station mobile (MS) dans un ou plusieurs messages courts (SM-MT) d'un service de messages courts.

16. Procédé selon la revendication 15, **caractérisé en ce que** du côté du réseau, un équipement de gestion (CCC) ou la base de données de réseau (IC) reçoit les informations nécessaires à l'initialisation et les envoie à la station mobile (MS).

17. Procédé selon la revendication 1, **caractérisé en ce que** la définition des zones (HOZO, CIZO, OFZO) individuellement par abonné et leur affectation à des lieux géographiques ainsi que l'attribution des tarifs de zone (THZ, TCZ, TOZ) sont sauvegardées dans une base de données de réseau (IC) d'un centre de commande de services (SCP) prenant en charge la commande de services de réseaux intelligents (IN).

18. Procédé selon la revendication 17, **caractérisé en ce que** le centre de commande de services (SCP) comprend une logique de services (SMP) qui
- enregistre au cours d'une phase d'initialisation les zones (HOZO, CIZO, OFZO) pour l'abonné mobile appelant, ou
- vérifie au cours d'une phase de traitement d'appel l'appel quant au séjour de la station mobile (MS) dans une de ses zones définies, ou
- modifie ou supprime au cours d'une phase de modification les zones pour l'abonné mobile appelant,
en fonction de la reconnaissance d'un appel IN dans un équipement de commutation (MSC) du réseau de téléphonie mobile, de manière spécifique à l'abonné.

19. Procédé selon la revendication 18, **caractérisé en ce que** lors du séjour de la station mobile (MS) dans l'une des zones définies (HOZO, CIZO, OFZO), la logique de services (SMP)
- envoie à la station mobile (MS) une information pour l'affichage de la zone (par exemple HOZO), et
- en plus des enregistrements, une identification de zone (ZID) est transmise à l'équipement de taxation (BC) pour identifier le type de zone.

20. Procédé selon la revendication 18 ou 19, **caractérisé en ce qu'**en raison de l'appel IN, l'identification de cellule (par exemple CID3) de la cellule radio actuelle (par exemple C3) dans laquelle se trouve l'abonné mobile est déterminée par la logique de services (SMP) et évaluée pour localiser l'appel, et **en ce qu'**indépendamment de la localisation de l'appel, soit une sélection de la zone à établir (par exemple HOZO) au cours de la phase d'initialisation est effectuée, soit la cellule radio (par exemple C3) est vérifiée quant à son appartenance à une zone définie (par exemple HOZO) au cours de la phase de traitement d'appel.

21. Procédé selon la revendication 20, **caractérisé en ce que** les zones (HOZO, CIZO, OFZO) sont sélectionnées à l'aide d'un numéro d'appel de service IN composé par l'abonné mobile ou à l'aide d'un ou de plusieurs chiffres du numéro d'appel de service IN.

22. Procédé selon l'une quelconque des revendications 17 à 21, **caractérisé en ce qu'**au centre de commande de services (SCP), une liste des affectations entre des lieux géographiques et des identifications de cellule est sauvegardée pour identifier les cellules radio et/ou des identifications de région pour identifier les régions de séjour.

23. Procédé selon la revendication 17, **caractérisé en ce que** le centre de commande de services (SCP) comprend une logique de services (SMP) qui, indépendamment de la reconnaissance d'un appel IN dans un équipement de commutation (MSC) du réseau de téléphonie mobile enregistre de manière spécifique à l'abonné les zones (HOZO, CIZO, OFZO) pour l'abonné mobile appelant au cours d'une phase d'initialisation et fournit des informations concernant les zones définies pour l'abonné, qui sont envoyées dans un ou plusieurs messages courts (SM-MT) du service de messages courts à la station mobile (MS) de l'abonné et sont sauvegardées du côté de la station mobile.

24. Procédé selon la revendication 23, **caractérisé en ce que** la logique de services (SMP) modifie les zones (HOZO, CIZO, OFZO) pour l'abonné mobile au cours d'une phase de modification ou les supprime et de nouvelles informations sont envoyées à la station mobile (MS) de l'abonné et sauvegardées du côté de la station mobile.

25. Procédé selon la revendication 23 ou 24, **caractérisé en ce que** la logique de services (SMP) envoie à l'équipement de taxation (BC) de manière spécifique à l'abonné des informations concernant les zones initialisées ou des zones modifiées ou supprimées et les sauvegarde dans l'équipement de taxation (BC).

26. Réseau de téléphonie mobile pour la taxation des appels qui peuvent être envoyés et reçus par des stations mobiles (MS) d'abonnés mobiles, avec
- une structure de réseau cellulaire composée de cellules radio, ainsi qu'avec
- des équipements radiotechniques (BSS) pour envoyer et recevoir des informations de signalisation et de charge utile à destination et en provenance des stations mobiles,
- des équipements de commutation (MSC) pour connecter des communications de signalisation et de charge utile,
- des équipements de mémoire (HLR) pour sauvegarder des données d'abonné des abonnés mobiles,
- un équipement de taxation (BC) pour enregistrer des enregistrements concernant les appels et pour déterminer la taxe d'appel respective en fonction des enregistrements,
- une ou plusieurs zones (HOZO, CIZO, OFZO) regroupant des cellules radio (C1 ... C6) et/ou des régions de séjour (LA1 ... LA4) individuellement par abonné et auxquelles des tarifs de zone (THZ, TCZ, TOZ) sont affectés), et avec
- une base de données de réseau (IC) qui sauvegarde des informations concernant des zones (HOZO, CIZO, OFZO) respectivement définies individuellement par abonné pour l'abonné mobile avec des tarifs de zone associés et fournit ces informations à l'équipement de taxation (BC) pour déterminer la taxe d'appel respective en cas de séjour de l'abonné mobile dans l'une des zones,
**caractérisé par**
- un système d'informations géographiques (GIS) qui fixe les zones (HOZO, CIZO, OFZO) respectivement individuellement par abonné à l'aide d'un lieu géographique de l'abonné mobile,
ainsi qu'en ce que
- des informations concernant les zones (HOZO, CIZO, OFZO) définies pour l'abonné mobile peuvent être envoyées par le réseau de téléphonie mobile à la station mobile (MS) de l'abonné et peuvent être sauvegardées dans la station mobile ou dans un module d'identité d'abonné (SIM) de la station mobile, et
- la station mobile (MS), lorsqu'elle se connecte au réseau de téléphonie mobile, peut vérifier si elle se trouve dans l'une des zones (HOZO, CIZO, OFZO) définies pour l'abonné mobile.

27. Réseau de téléphonie mobile selon la revendication 26, **caractérisé en ce que** la base de données de réseau (IC) est sauvegardée dans un centre de commande de services (SCP) prenant en charge la commande des services de réseaux intelligents (IN).

28. Réseau de téléphonie mobile selon la revendication 27, **caractérisé en ce que** le centre de commande de services (SCP) présente une logique de services (SMP) qui
- enregistre au cours d'une phase d'initialisation les zones (HOZO, CIZO, OFZO) pour l'abonné mobile appelant, ou
- vérifie au cours d'une phase de traitement d'appel l'appel quant au séjour de la station mobile (MS) dans une de ses zones définies, ou
- modifie ou supprime au cours d'une phase de modification les zones pour l'abonné mobile appelant,
en fonction de la reconnaissance d'un appel IN dans un équipement de commutation (MSC) du réseau de téléphonie mobile, de manière spécifique à l'abonné.

29. Réseau de téléphonie mobile selon la revendication 27, **caractérisé en ce que** le centre de commande de services (SCP) présente une logique de services (SMP) qui, en fonction de la reconnaissance d'un appel IN dans un équipement de commutation (MSC) du réseau de téléphonie mobile, de manière spécifique à l'abonné, enregistre au cours d'une phase d'initialisation les zones (HOZO, CIZO, OFZO) pour l'abonné mobile appelant et fournit des informations concernant les zones définies pour l'abonné qui sont envoyées à la station mobile (MS) de l'abonné dans un ou plusieurs messages courts (SM-MT) du service de messages courts et sauvegardées du côté de la station mobile.

30. Station mobile (MS) pour envoyer et recevoir des appels d'abonnés mobiles d'un réseau de téléphonie mobile avec une structure de réseau cellulaire composée de cellules radio, dans laquelle des cellules radio (C1 ... C6) et/ou des régions de séjour (LA1 ... LA4) sont regroupées en une ou plusieurs zones (HOZO, CIZO, OFZO) et des tarifs de zone (THZ, TCZ, TOZ) sont affectés aux zones (HOZO CIZO, OFZO),
**caractérisée par**
des moyens pour sauvegarder des informations envoyées du côté du réseau à travers une base de données de réseau (IC) et concernant les zones (HOZO, CIZO, OFZO) qui sont fixées pour l'abonné mobile respectivement par un système d'informations géographiques (GIS) à l'aide d'un lieu géographique de l'abonné mobile individuellement par abonné, ainsi que des moyens pour vérifier lors de la connexion au réseau de téléphonie mobile si la station mobile (MS) se trouve dans l'une des zones (HOZO, CIZO, OFZO) définies pour l'abonné mobile.

31. Station mobile selon la revendication 30, **caractérisée en ce qu'**elle présente des moyens visuels ou acoustiques pour afficher ou communiquer le séjour de la station mobile (MS) dans l'une des zones définies (HOZO, CIZO, OFZO).

32. Station mobile selon la revendication 30 ou 31, **caractérisé en ce qu'**elle présente des moyens visuels pour afficher la zone actuellement valable (par exemple HOZO) pour l'abonné mobile.
